(19) **Europäisches Patentamt / European Patent Office / Office européen des brevets**

(11) **EP 4 084 461 B1**

(12) **EUROPEAN PATENT SPECIFICATION**

(45) Date of publication and mention
of the grant of the patent:
**24.06.2026 Bulletin 2026/26**

(21) Application number: **21744203.7**

(22) Date of filing: **18.01.2021**

(51) International Patent Classification (IPC):
**G02B 9/34** *(2006.01)*        **G02B 13/00** *(2006.01)*
**G02B 13/02** *(2006.01)*        **H04M 1/02** *(2006.01)*

(52) Cooperative Patent Classification (CPC):
**G02B 13/0045; G02B 9/34; G02B 13/006;**
**G02B 13/02;** G02B 15/144111; H04M 1/0264

(86) International application number:
**PCT/CN2021/072565**

(87) International publication number:
**WO 2021/147828 (29.07.2021 Gazette 2021/30)**

(54) **CAMERA, PHOTOGRAPHING MODULE, AND TERMINAL DEVICE**

KAMERA, FOTOGRAFIERMODUL UND ENDGERÄT

APPAREIL DE PRISE DE VUES, MODULE DE PHOTOGRAPHIE, ET DISPOSITIF TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2020 CN 202010076737**

(43) Date of publication of application:
**02.11.2022 Bulletin 2022/44**

(73) Proprietor: **Huawei Technologies Co., Ltd.
Shenzhen, Guangdong 518129 (CN)**

(72) Inventors:
• **YE, Haishui
Shenzhen, Guangdong 518129 (CN)**
• **GE, Hong
Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
CN-A- 103 221 868      CN-A- 103 926 680
CN-A- 108 646 393      CN-U- 204 883 031
CN-Y- 2 604 696        FR-A- 803 679
US-A- 2 449 769        US-A- 4 062 630
US-A1- 2003 086 181

• "Handbook of Optical Systems, Vol 3", 1 January 2007, WILEY-VCH, Weinheim, ISBN: 978-3-52-740379-0, article HERBERT GROSS: "Handbook of Optical Systems, Vol.3 : Aberration Theory and Correction of optical Systems", pages: 377 - 379, XP055169688
• "Handbook of optical systems, Aberration theory and correction of optical systems, Chapter 31: Correction of Aberrations ED - Gross H", 1 January 2007, HANDBOOK OF OPTICAL SYSTEMS, ABERRATION THEORY AND CORRECTION OF OPTICAL SYSTEMS, WILEY-VCH, WEINHEIM, DE, PAGE(S) 215 - 221, 225, ISBN: 978-3-527-40379-0, XP002719371

EP 4 084 461 B1

## Description

This disclosure claims priority to Chinese Patent Application No. 202010076737.7, filed with the China National Intellectual Property Administration on January 22, 2020 and entitled "LENS GROUP, CAMERA MODULE, AND TERMINAL DEVICE".

## TECHNICAL FIELD

This disclosure relates to the field of optical imaging technologies, and in particular, to a lens group, a camera module, and a terminal device.

## BACKGROUND

In recent years, with development of terminal device technologies, a photographing function has become a necessary function of many intelligent terminal devices (such as a smartphone), and a lens group becomes one of necessary components in the terminal device. In a multi-camera combined zoom system, a long-focus lens group design is an indispensable part. In an existing multi-camera combined zoom system, a temperature effect (also referred to as a temperature drift phenomenon) and a chromatic aberration of a long-focus lens group are relatively severe, and quality of a modulation transfer function (Modulation Transfer Function, MTF) is also affected.

Therefore, a long-focus lens group with high imaging quality is urgently needed to meet a market demand.

Document US 4 062 630 A describes a telephoto lens system having a relatively large aperture. The lens system is composed of six lenses collected into four lens members, successively arranged, from the object side of the system to the image side, as follows: a first lens member including a positive lens whose convex surface faces the object side; a second lens member including a negative meniscus lens whose convex surface faces the object side and, a positive meniscus lens cemented to the negative meniscus lens; a third lens member including a positive lens whose convex surface faces the image side, and a biconcave lens cemented to the positive lens; and a fourth lens member consisting of a positive lens.

Document FR 803 679 A describes a tele-lens having a very grand opening.

Document US 2 449 769 A relates to an optical objective corrected for the spherical and chromatic aberrations, coma, astigmatism and Held curvature. The optical objective comprises a simple divergent member, a front convergent member consisting of a simple convergent component disposed in front of and slightly separated from a compound convergent component, and a rear convergent member in the form of a doublet having a biconvex convergent element connected to a meniscus divergent element.

Document Herbert Gross: "Handbook of Optical Systems, Vol.3: Aberration Theory and Correction of optical Systems" in: "Handbook of Optical Systems, Vol 3", 1 January 2007 (2007-01-01), Wiley-VCH, Weinheim, XP055169688, and document "Handbook of optical systems, Aberration theory and correction of optical systems, Chapter 31: Correction of Aberrations" ED1, 21 January 2007 (2007-01-01), HANDBOOK OF OPTICAL SYSTEMS, ABERRATION THEORY AND CORRECTION OF OPTICAL SYSTEMS, WILEY-VCH, WEINHEIM, DE, PAGE(S) 215 - 221, 225, XP002719371, describe some principles with regard to aberration theory.

## SUMMARY

This disclosure provides a lens group, a camera module, and a terminal device, to resolve the problem in the conventional technology.

To achieve the foregoing objectives, the following technical solutions are used in embodiments of this disclosure.

The present invention is set out by the set of appended claims. In the following, parts of the description and drawing referring to examples or implementations, which are not covered by the claims are not presented as embodiments of the invention, but as illustrative examples useful for understanding the invention. The embodiments of the invention are provided by the appended claims.

According to a first aspect, an embodiment of this disclosure provides a lens group, including a first group, a second group, a third group, and a fourth group that are sequentially disposed from an object side to an image side along an optical axis. The first group has positive optical power. The second group has positive optical power, the second group includes a second lens and a third lens that are sequentially disposed from the object side to the image side along the optical axis, and the second lens and the third lens are bonded as a doublet. The third group has negative optical power. An optical length of the lens group is TTL, an effective focal length of the lens group is f, and TTL and f meet: $TTL/f \leq 1$. In the lens group, optical power of lenses is matched with the doublet, and TTL and f are properly limited, so that a total length of the lens group (or a cylinder length of the lens group) can be reduced, and a back focal length can be maximized. In addition, miniaturization and a long focal length of the lens group can be ensured, and a chromatic aberration can be eliminated. A long focal length of at least 5x can be implemented by using only the four groups, so that a thickness of a camera module can be smaller.

For example, dispersion coefficients of the second lens and the third lens are respectively V2 and V3, V2 meets: $15 \leq V2 \leq 100$, and V3 meets: $15 \leq V3 \leq 100$. The dispersion coefficients V2 and V3 are properly limited, and optical power is properly allocated, so that a chromatic aberration can be effectively corrected.

For example, a curvature radius of an object side surface of the fifth lens is R51, a curvature radius of an image side surface of the fifth lens is R52, and R51 and R52 meet: $|f/R51|+|f/R52| \leq 8$. f, R51, and R52 are properly limited, so that the curvature radiuses of the two side surfaces of the fifth lens can be adjusted to proper values, to correct an off-axis aberration and a comprehensive aberration, and ensure an overall assembly process of the lens group.

For example, a combined focal length of the second lens and the third lens is f23, and f23 meets: $0 \leq f23/f \leq 3$. f and f23 are properly limited, and optical power, a dispersion coefficient, and a refractive index temperature coefficient are properly allocated, so that a chromatic aberration can be effectively corrected, and a temperature effect can be reduced. According to a second aspect, an embodiment of this disclosure provides a camera module, including an image sensor. The camera module further includes the lens group in the first aspect, and the image sensor is located on an image side of the lens group. The lens group is disposed in the camera module, so that a lens group length of the camera module can be shortened, and a camera module with a long focal length, a small size, temperature insensitivity, and high imaging quality can be implemented on a premise of ensuring that the camera module is relatively thin.

According to a third aspect, an embodiment of this disclosure provides a terminal device, including the camera module in the second aspect. The camera module with the lens group is disposed in the terminal device, so that various photographing application scenarios of a higher focal length multiple (especially, a long focal length of at least 5x) can be implemented, thereby improving photographing quality; and a thickness of the terminal device can be effectively reduced, thereby enhancing a function of the terminal device, and improving user experience.

According to a fourth aspect, an embodiment of this disclosure provides a mobile phone, including a housing, a display, a speaker, a microphone, and one or more camera modules in the second aspect, where at least one lens group is located on a surface on which the display is located, or/and at least one lens group is located on a surface that faces away from the display. The camera module with the lens group is disposed in the mobile phone, so that various photographing application scenarios of a higher focal length multiple (especially, a long focal length of at least 5x) can be implemented, thereby improving photographing quality; and a thickness of the mobile phone can be effectively reduced, thereby enhancing a function of the terminal device, and improving user experience. This solution is applicable to a smart household, an intelligent vehicle-mounted device, an intelligent wearable device, a smartphone, an artificial intelligence field device, and the like.

## BRIEF DESCRIPTION OF DRAWINGS

FIG. 1 is a schematic diagram of a structure of a lens group according to Example 1 of this disclosure;
FIG. 2 is a schematic simulation diagram of a spherical aberration of a lens group according to Example 1 of this disclosure;
FIG. 3 is a schematic simulation diagram of a field curve of a lens group according to Example 1 of this disclosure;
FIG. 4 is a schematic simulation diagram of distortion of a lens group according to Example 1 of this disclosure;
FIG. 5 is a schematic diagram of an off-axis chromatic aberration of a lens group according to Example 1 of this disclosure;
FIG. 6 is a schematic diagram in which a beam converges on an image sensor after passing through a lens group according to Example 1 of this disclosure;
FIG. 7 is a schematic diagram of a structure of a lens group according to Example 2 of this disclosure;
FIG. 8 is a schematic simulation diagram of a spherical aberration of a lens group according to Example 2 of this disclosure;
FIG. 9 is a schematic simulation diagram of a field curve of a lens group according to Example 2 of this disclosure;
FIG. 10 is a schematic simulation diagram of distortion of a lens group according to Example 2 of this disclosure;
FIG. 11 is a schematic diagram of an off-axis chromatic aberration of a lens group according to Example 2 of this disclosure;
FIG. 12 is a schematic diagram in which a beam converges on an image sensor after passing through a lens group according to Example 2 of this disclosure;
FIG. 13 is a schematic diagram of a structure of a lens group according to Example 3 of this disclosure;
FIG. 14 is a schematic simulation diagram of a spherical aberration of a lens group according to Example 3 of this disclosure;
FIG. 15 is a schematic simulation diagram of a field curve of a lens group according to Example 3 of this disclosure;

FIG. 16 is a schematic simulation diagram of distortion of a lens group according to Example 3 of this disclosure;

FIG. 17 is a schematic diagram of an off-axis chromatic aberration of a lens group according to Example 3 of this disclosure;

FIG. 18 is a schematic diagram in which a beam converges on an image sensor after passing through a lens group according to Example 3 of this disclosure; and

FIG. 19A and FIG. 19B are schematic diagrams of a mobile phone according to Example 8 of this disclosure.

Reference signs:

OA-optical axis;
ST-stop;
G1-first group;
G2-second group;
G3-third group;
G4-fourth group;
L1-first lens;
L2-second lens;
L3-third lens;
L4-fourth lens;
L5-fifth lens;
12-light filter (may be an infrared cut-off filter);
13-image sensor;
S1-object side surface of the first lens L1, namely, surface that is of the first lens and that faces an object side;
S2-image side surface of the first lens L1, namely, surface that is of the first lens and that faces an image side;
S3-object side surface of the second lens L2, namely, surface that is of the second lens and that faces the object side;
S4-bonding surface of the second lens L2 and the third lens L3;
S5-image side surface of the third lens L3, namely, surface that is of the third lens and that faces the image side;
S6-object side surface of the fourth lens L4, namely, surface that is of the fourth lens and that faces the object side;
S7-image side surface of the fourth lens L4, namely, surface that is of the fourth lens and that faces the image side;
S8-object side surface of the fifth lens L5, namely, surface that is of the fifth lens and that faces the object side;
S9-image side surface of the fifth lens L5, namely, surface that is of the fifth lens and that faces the image side;
S10-object side surface of the light filter 12, namely, surface that is of the light filter and that faces the object side;
S11-image side surface of the light filter 12, namely, surface that is of the light filter and that faces the image side; and
S12-image surface, namely, surface on which an image sensor is located.

## DETAILED DESCRIPTION

Terms used in examples of this disclosure are only used to explain specific examples of this disclosure, but are not intended to limit this disclosure.

It should be clear that the described examples are merely some rather than all of the examples of this disclosure. All other examples obtained by a person of ordinary skill in the art based on examples of this disclosure without creative efforts shall fall within the protection scope of this disclosure.

The terms used in examples of this disclosure are merely for the purpose of illustrating specific examples, and are not intended to limit the present disclosure. The terms "a", "said" and "the" of singular forms used in examples and the appended claims of this disclosure are also intended to include plural forms, unless otherwise specified in the context clearly.

It should be noted that the orientation words, such as "on", "under", "left", and "right", described in the examples of this disclosure are described from angles shown in the accompanying drawings, and should not be construed as a limitation on the examples of this disclosure. In addition, in the context, it should be further understood that, when one component is connected "on" or "under" another component, the component can be directly connected "on" or "under" the another component, or may be indirectly connected "on" or "under" the another component by using an intermediate component.

A lens group of a terminal device is designed by using a 4- to 7-lens structure, so that a long focal length can be implemented. As a designed focal length of a lens group is increased, a temperature effect is more obvious, severely affecting user experience.

In a solution, temperature compensation is performed on a terminal device, an ambient temperature of a lens group is monitored, a step of a voice coil motor (voice coil motor, VCM for short, where the voice coil motor can adjust a position of a lens to change a focal length) is calculated, and the lens is pushed to perform focusing. In this solution, the voice coil motor VCM needs to have a larger stroke (Stroke). Consequently, power consumption and design difficulty of the voice coil motor VCM are increased, and a non-linear area of the voice coil motor is easily entered. In addition, in the temperature compensation method, computing power of an image signal processor (Image Signal Processor, ISP) needs to be increased, and temperature compensation algorithm precision of the terminal device is limited. Therefore, it is difficult to perform real-time compensation based on a complex temperature scenario. In addition, a chromatic aberration of a long-focus lens group is relatively severe, affecting an imaging effect of a camera module.

As a focal length of the lens group is increased, a temperature effect is more obvious, and a chromatic aberration requirement is more stringent. Therefore, it has become a recognized problem in the industry to resolve both a temperature effect problem and a chromatic aberration problem while a long-focus requirement is met.

To resolve the foregoing problem, the examples of this disclosure provide a lens group, a camera module, and an electronic device. The following describes the examples of this disclosure with reference to the accompanying drawings in the examples of this disclosure.

The examples of this disclosure relate to the lens group, the camera module, and the electronic device. The lens group is a long-focus lens group used in a daily used electronic device. For example, an equivalent f-number is greater than or equal to 5x, and an equivalent focal length is greater than or equal to 125 mm. The equivalent focal length (Equivalent Focal Length, EFL) means that lens group focal lengths of different frames are equivalent to a 35 mm full-frame lens group focal length, and is an equal-proportional relationship. Equivalent focal length = 43.3 x actual focal length/diagonal length of a target surface of an image sensor. The electronic device may be a mobile phone, a notebook computer, a desktop computer, a tablet computer, a personal digital assistant (Personal Digital Assistant, PDA), a wearable device, an augmented reality (Augmented Reality, AR) device, a virtual reality (Virtual Reality, VR) device, a monitoring device, a vehicle-mounted device, or a smart household.

The following briefly describes the concepts in the foregoing examples.

Lens group: The lens group is a component that uses a lens refraction principle to enable light rays of a scene to pass through the lens group to form a clear image on a focusing plane.

Aberration: The aberration is a deviation with an ideal status of Gaussian optics (a first-order approximation theory or a paraxial light ray) due to inconsistency between a result obtained by tracing a non-paraxial light ray and a result obtained by tracing a paraxial light ray in a lens group. Aberrations are further classified into two types: a chromatic aberration and a monochromatic aberration. The chromatic aberration means that a refractive index of a material of a lens is a function of a wavelength, and therefore a dispersion phenomenon is caused due to different refractive indexes when light of different wavelengths passes through the lens. Dispersion in which a refractive index of light decreases as a wavelength increases may be referred to as normal dispersion, and dispersion in which a refractive index increases as a wavelength increases may be referred to as negative dispersion (or abnormal dispersion). The monochromatic aberration is an aberration caused even under highly monochromatic light. Based on caused effects, monochromatic aberrations are further classified into two types: "making an image blur" and "making an image deform". The former includes a spherical aberration, astigmatism, and the like, and the latter includes an image field curve, distortion, and the like. The chromatic aberration includes an axial chromatic aberration and an off-axis chromatic aberration. The axial chromatic aberration means that in an optical axis direction, a lens has different refractive indexes for light of different wavelengths, and therefore focal points of light of different colors are different.

Optical power: The optical power is equal to a difference between an image-side beam convergence degree and an object-side beam convergence degree, and represents a light ray deflection capability of a lens group. If the optical power is positive, the lens has a convergence action; or if the optical power is negative, the lens has a divergence action.

Focal length: The focal length is a distance from a main plane of a lens group to a corresponding focal point.

Aperture stop: A stop with a smallest incidence aperture angle is referred to as the aperture stop.

Object side: A side that is of a lens and that is closest to a real object is the object side.

Image side: A side that is of a lens and that is closest to an imaging side is the image side.

Temperature effect: The temperature effect is also referred to as a temperature drift phenomenon, and means that a surface shape, a size, a refractive index of a lens vary as a temperature increases. A focal length and a back focal length of a lens group change with a temperature. This is referred to as a temperature effect.

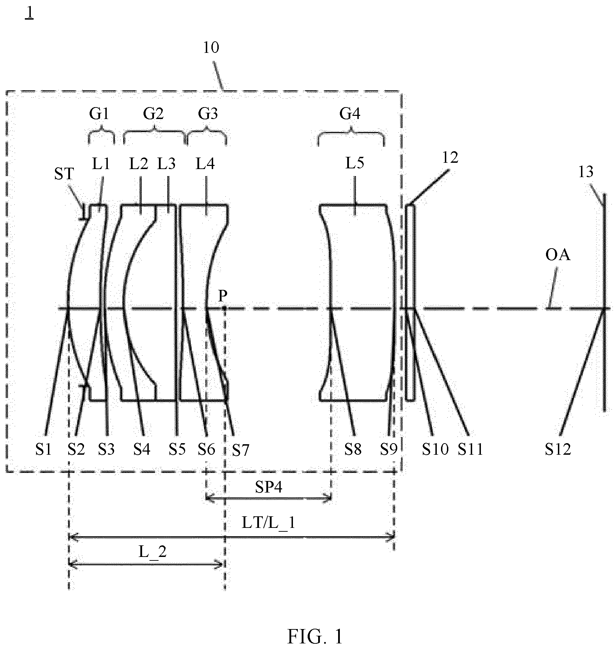

As shown in FIG. 1, the lens group provided in the examples of this disclosure is described now. FIG. 1 is a cross-sectional view of a lens group in an optical axis direction. In FIG. 1, for clear display, an object surface is not shown. The lens group is disposed between the image sensor and the object surface, to form an image of a real object and reflect the image to the image sensor. Therefore, a side on which the real object is located may be referred to as an object side, a side on which the image sensor is located is referred to as an image side, and a surface on which the image sensor is located may be referred to as an image surface. A lens group 10, a light filter 12, and an image sensor 13 jointly form a camera module 1. The lens group 10 includes a stop (also referred to as an aperture stop) ST, a first group G1, a second group G2, a third group G3, and a fourth group G4 that are sequentially disposed from an object side to an image side along an optical axis OA. The first group G1 has positive optical power. The second group G2 has positive optical power, the second group G2 includes a second lens L2 and a third lens L3 that are sequentially disposed from the object side to the image side along the optical axis, and the second lens L2 and the third lens L3 are bonded as a doublet. The third group has negative optical power. Optical power of the first group G1 to the fourth group G4 is designed in matching with the doublet, so that a high-quality long-focus lens group that can implement a compact long-focus lens group and chromatic aberration elimination can be designed.

Specifically, the first group G1 has the positive optical power; and focuses a beam and deflects a large-angle light ray, so that a total length of the lens group 10 can be shortened, thereby facilitating miniaturization of the lens group. In a specific example, two side surface shapes of the first group G1 are consistent in direction (for example, when an object side surface S1 of the first group G1 is a convex surface at a paraxial position, an image side surface S2 of the first group G1 is a concave surface at a paraxial position; or when an object side surface S1 of the first group G1 is a concave surface at a paraxial position, an image side surface S2 of the first group G1 is a convex surface at a paraxial position), and angles of view are slightly scattered, thereby facilitating optimization of an aberration of the lens group. The second group G2 has the positive optical power, and further focuses a beam obtained after the first group G1 performs focusing, so that the total length of the lens group 10 can be further shortened, thereby facilitating miniaturization of the lens group. The second group G2 includes the second lens L2 and the third lens L3, and the second lens L2 and the third lens L3 are bonded as the doublet. The second lens L2 and the third lens L3 may be respectively made of materials with different refractive indexes and dispersion coefficients, to eliminate a chromatic aberration, thereby improving imaging quality. In some examples, the second lens L2 and the third lens L3 may be bonded by using an adhesive. The adhesive may be a material such as Canadian fir balsam or epoxy. In addition, in some other examples, the second lens L2 and the third lens L3 may be bonded without using an adhesive, and the second lens L2 and the third lens L3 are bonded together by using an external fixture.

The third group has the negative optical power to diffuse a beam, thereby helping implement a long focal length of a high multiple and balance optical aberrations at different apertures.

An effective focal length of the lens group 10 is f, and a distance (also referred to as an optical length of the lens group 10) from the object side surface S1 of the first group G1 to an imaging surface of an object at infinity on the optical axis is TTL (Through the Lens). TTL and f meet: TTL/f≤1. TTL/f≤1 is properly limited, so that a size of the entire lens group 10 is reduced on a premise of ensuring a long focal length. If a value of TTL/f≤1 is too large, an overall size of the camera module is too large.

In the lens group 10 in this example of this disclosure, optical power of lenses is matched with the doublet, so that the total length of the lens group (or a cylinder length of the lens group) can be reduced, and a back focal length can be maximized. In addition, miniaturization and a long focal length of the lens group can be ensured, and a chromatic aberration can be eliminated. A long focal length of at least 5x can be implemented by using only the four groups, so that a thickness of the camera module 1 can be smaller.

In a specific example, an object side surface S1 of a first lens L1 is a convex surface at a paraxial position, and the first group G1 has the positive optical power, so that a beam can be better focused, and the total length of the lens group 10 can be shortened, thereby facilitating miniaturization of the lens group.

In a specific example, dispersion coefficients (Abbe numbers) of the second lens L2 and the third lens L3 are respectively V2 and V3, V2 meets: 15≤V2≤100, and V3 meets: 15≤V3≤100. The dispersion coefficients V2 and V3 are properly limited, and optical power is properly allocated, so that a chromatic aberration can be effectively corrected. In some examples, compensation design is performed on the dispersion coefficients of the second lens L2 and the third lens L3, to better reduce a comprehensive chromatic aberration of the lens group, thereby achieving a better imaging effect. For example, if the dispersion coefficient V2 of the second lens L2 meets: 15≤V2≤40, and the dispersion coefficient V3 of the third lens L3 meets: 40≤V3≤100, the dispersion coefficients of the second lens L2 and the third lens L3 can be effectively compensated for. Alternatively, if the dispersion coefficient V2 of the second lens L2 meets: 40≤V2≤100, and the dispersion coefficient V3 of the third lens L3 meets: 15≤V3≤40, the dispersion coefficients of the second lens L2 and the third lens L3 can also be effectively compensated for.

It should be noted that the dispersion coefficient is an index used to indicate a dispersion capability of a transparent medium. Generally, a larger refractive index of the medium indicates more severe dispersion and a smaller dispersion coefficient. Conversely, a smaller refractive index of the medium indicates slighter dispersion and a larger dispersion coefficient. A calculation formula of the dispersion coefficient is V=(n-1)/(nf-nc), where n is a refractive index of light of a 587 nm wavelength, nf is a refractive index of f light (light of a 486 nm wavelength), and nc is a refractive index of c light (light of a 656 nm wavelength).

In a specific example, a combined focal length of the second lens L2 and the third lens L3 is f23, and f23 meets: 0≤f23/f≤3. f and f23 are properly limited, and optical power, a dispersion coefficient, and a refractive index temperature coefficient are properly allocated, so that a chromatic aberration can be effectively corrected, and a temperature effect can be reduced. If f23/f is too large, achromatic aberration correction capability is relatively poor, and it is unhelpful to reduce a temperature effect.

In a specific example, a bonding surface S4 of the second lens L2 and the third lens L3 is a spherical surface, so that a chromatic aberration can be effectively corrected, and manufacturing difficulty of the doublet can be reduced. A curvature radius of the bonding surface S4 is R23, and R23 meets: 0 mm≤R23≤10 mm. R23 is properly limited, so that the curvature radius R23 of the bonding surface S4 can be adjusted to a proper value, to correct a chromatic aberration and reduce manufacturing difficulty of the doublet.

In a specific example, a curvature radius of an object side surface S8 of the fifth lens L5 is R51, a curvature radius of an image side surface S9 of the fifth lens L5 is R52, and R51 and R52 meet: $|f/R51|+|f/R52|\leq8$. f, R51, and R52 are properly limited, so that the curvature radiuses of the two side surfaces of the fifth lens L5 can be adjusted to proper values, to correct an off-axis aberration and a comprehensive aberration, and ensure an overall assembly process of the lens group 10. If $|f/R51|+|f/R52|$ is too large, a capability of correcting the off-axis aberration and the comprehensive aberration is relatively poor.

As shown in FIG. 1, a spacing from a center position of an image side surface of the third group G3 to a center position of an object side surface of the fourth group G4 is SP4, a spacing from a center position of the object side surface of the first group G1 to a center position of an image side surface of the fourth group G4 is LT, and SP4 and LT meet: $SP4/LT\leq0.3$. SP4 and LT are properly limited, so that the curvature radiuses of the two side surfaces of the fifth lens L5 can be adjusted to proper values, to correct an off-axis aberration and a comprehensive aberration, and ensure an overall assembly process of the lens group 10. If $|f/R51|+|f/R52|$ is too large, a capability of correcting the off-axis aberration and the comprehensive aberration is relatively poor. In FIG. 1, when the first group G1 is the first lens L1, the third group G3 is the fourth lens L4, and the fourth group G4 is the fifth lens L5, SP4 is a spacing from a center position of an image side surface S7 of the fourth lens L4 to a center position of the object side surface S8 of the fifth lens L5, and LT is a spacing from the center position of the object side surface S1 of the first lens L1 to a center position of the image side surface S9 of the fifth lens L5.

A length of the lens group 10 is L_1, a length from a center P of gravity of the lens group 10 to a vertex position of the object side surface of the first group G1 is L_2, and L_1 and L_2 meet: $0.4\times L\_1\leq L\_2\leq0.6\times L\_1$. L_1 and L_2 are properly limited, so that the center of gravity P of the lens group 10 can be near the center of the length of the lens group 10. Therefore, titling of a motor can be prevented to effectively prevent shaking, and an aberration can be optimized. Materials and thicknesses of the groups may be properly allocated, so that the center P of gravity of the lens group 10 is disposed at a proper position. When the second lens L2 and the third lens L3 are made of glass, and the first group G1, the third group G3, and the fourth group G4 are made of plastic (or resin), because a density of glass is greater than a density of plastic, a thickness of the fourth group G4 may be appropriately increased, to prevent the center P of gravity of the lens group 10 from being too close to the front (a direction towards the object side is the front). In FIG. 1, when the first group G1 is the first lens L1, the third group G3 is the fourth lens L4, and the fourth group G4 is the fifth lens L5; the object side surface S1 of the first lens L1 is a convex surface, and the vertex position of the object side surface of the first group G1 is the center position of the object side surface S1; and the image side surface S9 of the fifth lens L5 is a convex surface, and a vertex position of the image side surface of the fourth group G4 is the center position of the image side surface S9, the length L_1 of the lens group 10 indicates a same length as LT. If the object side surface S1 of the first lens L1 is a concave surface, the vertex position of the object side surface of the first group G1 is an edge position of the object side surface S1. If the image side surface S9 of the fifth lens L5 is a concave surface, a vertex position of the image side surface of the fourth group G4 is an edge position of the image side surface S9.

When the first group G1 is the first lens L1, the third group G3 is the fourth lens L4, and the fourth group G4 is the fifth lens L5, a material of at least one of the first lens L1, the second lens L2, the third lens L3, the fourth lens L4, and the fifth lens L5 is made of glass. A refractive index temperature coefficient of glass is less than a refractive index temperature coefficient of plastic (the refractive index temperature coefficient of plastic is about 10 to 100 times the refractive index temperature coefficient of glass). Therefore, a lens made of glass can effectively compensate for a temperature effect. In addition, dispersion of the lens made of glass is relatively low, to help reduce dispersion. A relative refractive index temperature coefficient $\beta$ (may also be represented as (dn/dt)rel) indicates a change coefficient, of a refractive index of a material in a medium such as air, with a temperature. In an example, a relative refractive index temperature coefficient $\beta$ of glass meets: $-9\times10^{-5}\leq\beta\leq9\times10^{-5}$. The refractive index temperature coefficient $\beta$ is properly limited, and optical power is allocated, so that a temperature effect in the module 1 can be effectively eliminated. It should be noted that, during specific implementation, the other lenses of the lens group may be all made of resin such as plastic. The plastic material has low costs, and is easy to be processed, thereby reducing material costs and processing costs of the entire lens group. The lens group formed by mixing and matching glass and resin can have a characteristic that a refractive index of the glass material is insensitive to a temperature coefficient, and can effectively reduce material costs and processing costs of the entire lens group. In some examples, the second lens L2 and the third lens L3 are made of glass, that is, two lenses of the doublet are both glass. The dispersion coefficients of the second lens L2 and the third lens L3 are matched, so that a chromatic aberration can be better weakened while a temperature effect is compensated for.

In a specific example, the lens group 10 further includes an aperture stop ST, and the aperture stop ST may be a vignetting stop. The aperture stop ST is used to define a width of a beam incident from the object side, to limit an imaging range of the lens group 10, thereby helping reduce an outer diameter of the lens group 10. In FIG. 1, the aperture stop ST is located on a side that is of the first group G1 and that faces the image side. In another example, the aperture stop ST may be located on a side that is of the first group G1 and that faces the object side.

In the lens group 10, at least a part of surfaces of the first lens L1 to the fifth lens L5 are aspherical surfaces, to help correct an aberration, and also help correct a peripheral aberration of an image, thereby improving imaging quality of the lens group.

An aspherical curve equation of the lenses is represented as follows:

$$Z = \frac{cr^2}{1 + \sqrt{1 - (1+k)c^2r^2}} + \sum_{i=2}^{n} A_{2i}r^{2i}$$

Z is a vector height parallel to a z-axis, r is a vertical distance between a point on an aspherical curve and the optical axis, c is a curvature at a vertex at which an aspherical surface intersects the optical axis, k is a conic coefficient, Ai is an $i^{th}$-order aspherical coefficient, and n is a total quantity of polynomial coefficients in a series.

Shapes, thicknesses, optical power, and materials of the lenses are properly configured, so that a temperature drift coefficient $\triangle f/\triangle°C$ (a change rate of the effective focal length f with a temperature) of the lens group 10 meets: -0.5 $\mu$m/°C$\leq\triangle f/\triangle°$C$\leq$1.5 $\mu$m/°C. The temperature drift coefficient $\triangle f/\triangle°C$ is properly limited, so that a temperature effect of the lens group 10 can be effectively suppressed.

It should be further noted that the lenses in this specification are all optical elements that are disposed on the optical axis and that have optical power. For a surface shape of the lens, the "convex surface" and the "concave surface" both indicate paraxial shapes. That is, the foregoing surface shapes all indicate a shape of a part that has substantial impact on a light ray. However, an edge shape of the lens is not strictly limited. An object side surface and an image side surface of the lens may be parallel, thereby facilitating processing.

It can be seen that the lens group provided in this example of this disclosure includes the stop ST, the first group G1, the second group G2, the third group G3, and the fourth group G4 that are sequentially disposed from the object side to the image side along the optical axis. The first group G1 has the positive optical power. The second group G2 has the positive optical power, the second group G2 includes the second lens L2 and the third lens L3 that are sequentially disposed from the object side to the image side along the optical axis, and the second lens L2 and the third lens L3 are bonded as the doublet. The third group has the negative optical power. In the lens group 10 in this example of this disclosure, a glass-plastic mixed lens group structure is used in this example, and materials, shapes, thicknesses, chromatic aberration coefficients, optical power, and the like of the groups are properly allocated, so that dispersion of the lens group can be reduced, and a temperature effect of a long-focus photographing lens group can be effectively improved. An MTF and a focal length of the lens group are insensitive to a temperature. In addition, light rays of different wavelengths can be focused on one image surface after passing through the lens group 10, thereby improving imaging performance, and also making the long-focus lens group more compact. A long focal length can be implemented by using only a limited quantity of groups (or lenses), so that a thickness of the module 1 can be less than 68 mm. An off-axis chromatic aberration CA1 of the lens group 10 may be made less than or equal to 1 $\mu$m, and an axial chromatic aberration CA2 of the lens group 10 may be made less than or equal to 10 $\mu$m, so that an imaging effect is good.

Based on the structural framework of the foregoing lens group, the following describes in detail a specific implementation of the lens group provided in the examples of this disclosure.

**Example 1**

Refer to FIG. 1. In this implementation, a lens group 10 includes an aperture stop ST, a first group G1, a second group G2, a third group G3, and a fourth group G4 that are sequentially disposed from an object side to an image side along an optical axis OA. The first group G1 includes a first lens L1. The second group G2 includes a doublet including a second lens L2 and a third lens L3. The third group G3 includes a fourth lens L4. The fourth group G4 includes a fifth lens L5. The aperture stop ST, the first lens L1, the second lens L2, the third lens L3, the fourth lens L4, and the fifth lens L5 jointly constitute the lens group 10 in this example of this disclosure. The lens group 10, a light filter 12, and an image sensor 13 that are sequentially arranged from the object side to the image side along the optical axis constitute a camera module 1.

The first group G1 has positive optical power. The first group G1 includes the first lens L1, the first lens L1 has the positive optical power, an object side surface S1 of the first lens L1 is a convex surface at a paraxial position, an image side surface S2 of the first lens L1 is a concave surface at a paraxial position, and the object side surface S1 and the image side surface S2 are both aspherical surfaces. A beam entering from the aperture stop 10 is focused by using the first lens L1, so that a total length of the lens group can be shortened, thereby facilitating miniaturization of the lens group. The object side surface S1 and the image side surface S2 are both aspherical surfaces, to help correct an aberration. The first lens L1 is made of resin, to help reduce costs. A distance (also referred to as an optical length of the lens group 10) from the object side surface S1 of the first group G1 to an imaging surface of an object at infinity on the optical axis is TTL, and TTL/f$\leq$0.95, to help implement relatively short TTL.

The second group G2 has positive optical power. The second group G2 includes the second lens L2 and the third lens L3, and the second lens L2 and the third lens L3 are bonded as the doublet to eliminate a chromatic aberration. An object side surface S3 of the second lens L2 is a convex surface at a paraxial position, and an object side surface of the second lens L2 and an image side surface of the third lens L3 are bonded, to form a bonding surface S4. The bonding surface S4 is a concave surface with respect to the second lens L2 (the image side surface of the second lens L2 is a concave surface at a paraxial position). The bonding surface S4 is a convex surface with respect to the third lens L3 (the object side surface of the third lens L3 is a convex surface at a paraxial position). An image side surface S5 of the third lens L3 is a convex surface at a paraxial position. A beam is further focused after passing through the second group G2, so that the total length of the lens group can be shortened, thereby facilitating miniaturization of the lens group. The doublet is disposed, so that a chromatic aberration can be eliminated, thereby improving imaging quality. The object side surface S3 of the second lens L2, the bonding surface S4, and the image side surface S5 of the third lens L3 are all spherical surfaces, so that manufacturing difficulty of the doublet can be reduced, and bonding precision of the second lens L2 and the third lens L3 can also be improved, thereby helping converge, on one image surface, a beam passing through the lens group 10.

The second lens L2 and the third lens L3 are both made of glass, and a refractive index temperature coefficient of glass is less than a refractive index temperature coefficient of plastic (the refractive index temperature coefficient of plastic is about 10 to 100 times the refractive index temperature coefficient of glass). Therefore, a lens made of glass can effectively compensate for a temperature effect. In addition, dispersion of the lens made of glass is relatively low, to help reduce dispersion. A relative refractive index temperature coefficient $\beta$ of glass meets: $-9\times10^{-5}\leq\beta\leq9\times10^{-5}$. The refractive index temperature coefficient $\beta$ is properly limited, and optical power is allocated, so that a temperature effect in the module 1 can be effectively eliminated. The second lens L2 and the third lens L3 may be made of glass with different refractive indexes, to better eliminate a chromatic aberration, thereby improving imaging quality. A combined focal length of the second lens L2 and the third lens L3 is f23, and f23 meets: $0\leq f23/f\leq3$. Optical power, a refractive index temperature coefficient, and the combined focal length are properly set, so that a chromatic aberration can be effectively corrected, and a temperature effect can also be reduced.

Dispersion coefficients (Abbe numbers) of the second lens L2 and the third lens L3 are respectively V2 and V3, V2 meets: $15\leq V2\leq100$, and V3 meets: $15\leq V3\leq100$. A chromatic aberration of the lens group 10 can be corrected through proper optical power allocation and dispersion coefficient selection. For example, if the dispersion coefficient V2 of the second lens L2 meets: $15\leq V2\leq40$, and the dispersion coefficient V3 of the third lens L3 meets: $40\leq V3\leq100$, the dispersion coefficients of the second lens L2 and the third lens L3 can be effectively compensated for. Alternatively, if the dispersion coefficient V2 of the second lens L2 meets: $40\leq V2\leq100$, and the dispersion coefficient V3 of the third lens L3 meets: $15\leq V3\leq40$, the dispersion coefficients of the second lens L2 and the third lens L3 can also be effectively compensated for. The dispersion coefficients that are of the second lens L2 and the third lens L3 and that are compensated for each other are selected to correct a chromatic aberration of the lens group 10, so that an axial chromatic aberration CA1 of the lens group 10 can be made less than or equal to 10 $\mu$m.

The third group G3 has negative optical power. The third group G3 includes the fourth lens L4, the first lens L4 has the negative optical power, an object side surface S6 of the fourth lens L4 is a concave surface at a paraxial position, an image side surface S7 of the fourth lens L4 is a concave surface at a paraxial position, and the object side surface S6 and the image side surface S7 are both aspherical surfaces. A beam is diffused by using the fourth lens L4, and relative positions between the first group G1, the second group G2, the third group G3, and the fourth group G4 may be adjusted, to implement a long focal length of a high multiple (the high multiple is greater than or equal to 5x, and even can reach at least 10x). The object side surface S6 and the image side surface S7 are both aspherical surfaces, to help correct an aberration. The fourth lens L4 is made of resin, to help reduce costs.

The fourth group G4 has positive optical power. The fourth group G4 includes the fifth lens L5, the fifth lens L5 has the positive optical power, an object side surface S8 of the fifth lens L5 is a concave surface at a paraxial position, an image side surface S9 of the fifth lens L5 is a convex surface at a paraxial position, and the object side surface S8 and the image side surface S9 are both aspherical surfaces. The fifth lens L5 has the positive optical power, to help ensure a final focusing function, correct astigmatism, and control an incidence angle of a main light ray towards the image sensor. The object side surface S8 and the image side surface S9 are both aspherical surfaces, to help correct an aberration, and also help correct a peripheral aberration of an image, thereby improving imaging quality of the lens group. The fifth lens L5 is made of resin, to help reduce costs.

An aspherical curve equation of the lenses is represented as follows:

$$Z = \frac{cr^2}{1+\sqrt{1-(1+k)c^2r^2}} + \sum_{i=2}^{n} A_{2i}r^{2i}$$

Z is a vector height parallel to a z-axis, r is a vertical distance between a point on an aspherical curve and the optical axis, c is a curvature at a vertex at which an aspherical surface intersects the optical axis, k is a conic coefficient, Ai is an $i^{th}$-order aspherical coefficient, and n is a total quantity of polynomial coefficients in a series.

The following further describes related lens parameters of the lens group in a specific application scenario, as shown in the following Table 1. Meanings of symbols in Table 1 are in one-to-one correspondence with the meanings given above. Details are not described herein again. In the following table, each surface corresponds to one surface spacing, and a value of the surface spacing is a spacing, between the surface and a neighboring surface located on an image side of the surface, on the optical axis. For example, a surface spacing of the stop ST is -0.400 mm, indicating that a spacing between the stop ST and the object side surface S1 on the optical axis is -0.400 mm, where the minus sign "-" indicates that the stop ST is closer to the image side on the optical axis than the object side surface S1; and a surface spacing of the object side surface S1 is 0.834 mm, indicating that a spacing between the object side surface S1 and the object side surface S2 on the optical axis is 0.834 mm, where the object side surface S1 is closer to the object side on the optical axis than the object side surface S2. By analogy, details are not described again.

**Table 1**

| Value instance 1 (length unit: mm) TTL/f=0.95; f23/f=0.82; SP4/LT=0.23; \|f/R51\|+\|f/R52\|=0.27; | | | | | | | |
|---|---|---|---|---|---|---|---|
| Surface number | Description | Surface type | Curvature radius | Surface spacing | Material | Refractive index | Dispersion coefficient |
| Object surface | / | Plane | / | / | / | / | / |
| ST | Aperture stop | Plane | / | -0.400 | / | / | / |

| Value instance 1 (length unit: mm) TTL/f=0.95; f23/f=0.82; SP4/LT=0.23; \|f/R51\|+\|f/R52\|=0.27; | | | | | | | |
|---|---|---|---|---|---|---|---|
| Surface number | Description | Surface type | Curvature radius | Surface spacing | Material | Refractive index | Dispersion coefficient |
| S1 | First lens | Aspherical surface | 4.615 | 0.834 | Plastic | 1.5445 | 55.987 |
| S2 | | Aspherical surface | 17.288 | 0.100 | | | |
| S3 | Second lens | Spherical surface | 5.764 | 0.500 | Glass | 1.7174 | 29.51 |
| S4 | Third lens | Spherical surface | 3.109 | 1.341 | Glass | 1.5891 | 61.163 |
| S5 | | Spherical surface | 760.066 | 0.184 | | | |
| S6 | Fourth lens | Aspherical surface | -20.420 | 0.600 | Plastic | 1.5445 | 55.987 |
| S7 | | Aspherical surface | 4.073 | 3.180 | | | |
| S8 | Fifth lens | Aspherical surface | 62.794 | 1.645 | Plastic | 1.651 | 21.518 |
| S9 | | Aspherical surface | -370.200 | 0.300 | | | |
| S10 | Infrared cut-off filter | Plane | / | 0.210 | / | / | / |
| S11 | | Plane | | 4.875 | | | |
| S12 | Image sensor (image surface) | Plane | / | / | / | / | / |

The following Table 2 and Table 3 further give a conic constant K and an aspherical coefficient that correspond to each lens surface of the lens group in this specific example (in an example, there is an aspherical coefficient of a total of three orders). In Table 3, ImgH is a maximum image height of the lens group, TTL is a distance from a surface that is of the first lens and that faces the object side to the image surface on the optical axis, f1 is a focal length of the first lens, f2 is a focal length of the second lens, f3 is a focal length of the third lens, f4 is a focal length of the fourth lens, and f5 is a focal length of the fifth lens. Details are shown in the following Table 2 and Table 3:

**Table 2**

| Surface number | K | A4 | A6 |
|---|---|---|---|
| S1 | -3.614E-011 | 3.709E-004 | 9.497E-006 |
| S2 | -1.154E-010 | 1.039E-003 | -2.747E-005 |
| S3 | 0 | 0 | 0 |
| S4 | 0 | 0 | 0 |
| S5 | 0 | 0 | 0 |
| S6 | -1.264E-010 | 1.331E-003 | -6.578E-005 |
| S7 | 7.300E-011 | -3.134E-004 | 2.506E-004 |
| S8 | -1.313E-010 | -8.334E-003 | -5.622E-004 |
| S9 | -1.282E-010 | -6.799E-003 | -6.077E-005 |

**Table 3**

| Parameter | TTL | ImgH | f | f1 | f2 | f3 | f4 | f5 |
|---|---|---|---|---|---|---|---|---|
| Value (mm) | 13.77 | 2.8 | 14.50 | 11.26 | 18.79 | -23.31 | -6.16 | 81.92 |

Based on Table 1 to Table 3, the following describes an experimental test result of the lens group in this example of this disclosure.

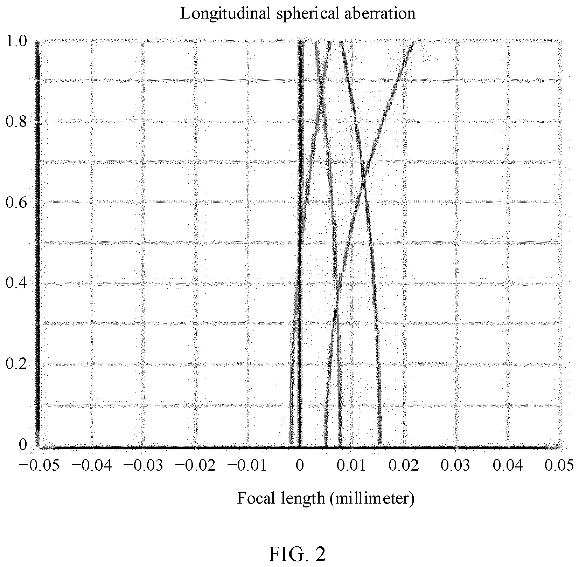

FIG. 2 to FIG. 5 respectively show simulation results of a spherical aberration (spherical aber), a field curve (field Curves), distortion (DiSTrtion), and an off-axis chromatic aberration according to examples of this disclosure. It can be seen from the simulation results that, in this example, on a premise that the lens group 10 meets a small size and a long focal length of a high multiple, an axial chromatic aberration (a longitudinal spherical aberration) of the lens group 10 is less than 25 $\mu$m, an off-axis chromatic aberration of the lens group 10 is less than 1 $\mu$m, and a distortion value of the lens group 10 is relatively good, so that a high-definition imaging requirement can also be ensured in a long-focus scenario.

Specifically, in FIG. 2, several curves respectively represent spherical aberrations caused after light of different wavelengths passes through the lens group, a vertical coordinate is a distance and is specifically a distance that is from an optical label of light of each wavelength to the optical axis and that is obtained when the light of each wavelength is incident along the optical axis, and a horizontal coordinate is a spherical aberration (a chromatic spherical aberration). It can be seen from the figure that the spherical aberrations caused after the light of the different wavelengths passes through the lens group are all less than 25 $\mu$m.

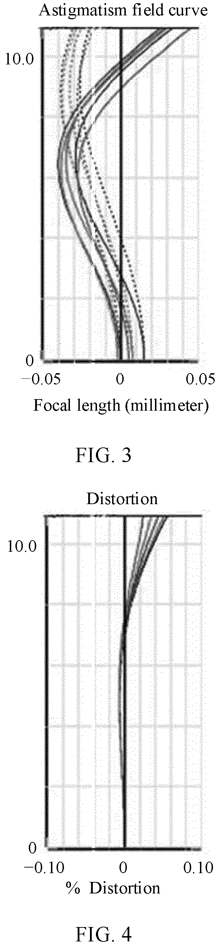

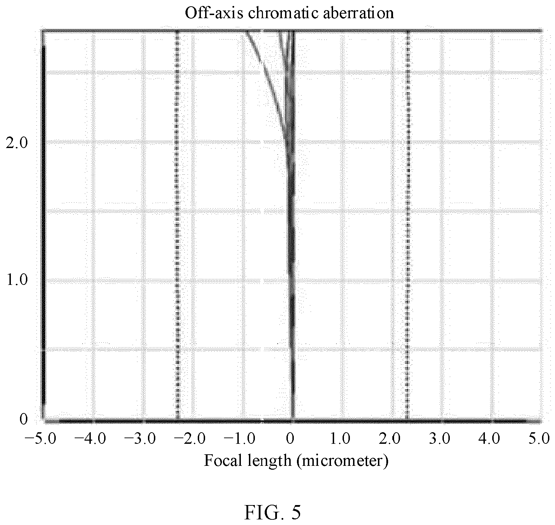

FIG. 3 shows astigmatism field curves, the several curves respectively represent field curves caused after light of different wavelengths passes through the lens group, a horizontal coordinate is a field of view, and a vertical coordinate is an image height, namely, different image heights caused after light of each wavelength is incident to the lens group along different field of view positions. FIG. 4 shows distortion curves, the several curves respectively represent distortion caused after light of different wavelengths passes through the lens group, a vertical coordinate is a field of view, and a horizontal coordinate is a distortion value. The distortion value is a value that is obtained by subtracting an ideal image height from an actual image height and then dividing an obtained difference by the ideal image height and that is obtained after light of each wavelength passes through the lens group. In FIG. 5, several curves respectively represent off-axis chromatic aberrations caused after light of different wavelengths passes through the lens group, a vertical coordinate is a distance and is specifically a distance that is from an optical label of light of each wavelength to the optical axis and that is obtained when the light of each wavelength is incident along the optical axis, and a horizontal coordinate is an off-axis chromatic aberration. It can be seen from the figure that the off-axis chromatic aberrations caused after the light of the different wavelengths passes through the lens group are all less than 1 $\mu$m.

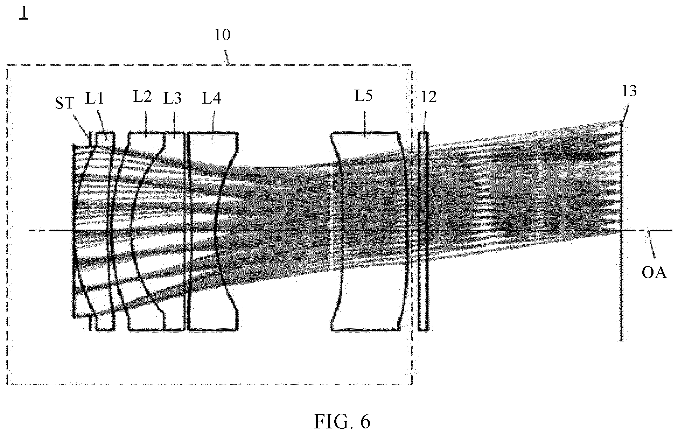

FIG. 6 shows that a beam converges on one image surface (image sensor) after passing through the lens group 10 and the light filter 12.

In the foregoing example, a glass-plastic mixed lens group structure is used, and materials, shapes, thicknesses, chromatic aberration coefficients, optical power, and the like of the groups are properly allocated, so that dispersion of the lens group can be reduced, and a temperature effect of a long-focus photographing lens group can be effectively improved. In this way, light rays of different wavelengths can be focused on one image surface after passing through the lens group 10, thereby improving imaging performance and also making the long-focus lens group more compact. A long focal length can be implemented by using only a limited quantity of groups (or lenses), so that a thickness of the module 1 can be less than 68 mm. Specifically, an off-axis chromatic aberration CA1 of the lens group 10 may be made less than or equal to 1 $\mu$m, an axial chromatic aberration CA2 of the lens group 10 may be made less than or equal to 10 $\mu$m, and a temperature drift coefficient $\triangle f/\triangle°C$ may meet: -0.5 $\mu$m/°C$\leq\triangle f/\triangle°C\leq$1.5 $\mu$m/°C.

Example 2

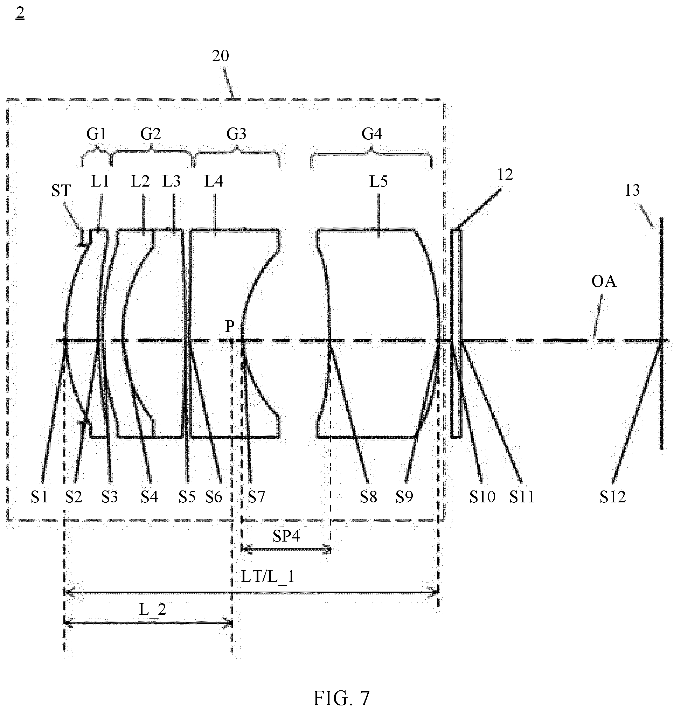

Refer to FIG. 7. In this implementation, a lens group 20 includes an aperture stop ST, a first group G1, a second group G2, a third group G3, and a fourth group G4 that are sequentially disposed from an object side to an image side along an optical axis OA. The first group G1 includes a first lens L1. The second group G2 includes a doublet including a second lens L2 and a third lens L3. The third group G3 includes a fourth lens L4. The fourth group G4 includes a fifth lens L5. The aperture stop ST, the first lens L1, the second lens L2, the third lens L3, the fourth lens L4, and the fifth lens L5 jointly constitute the lens group 20 in this example of this disclosure. The lens group 20, a light filter 12, and an image sensor 13 that are sequentially arranged from the object side to the image side along the optical axis constitute a camera module 2.

The first group G1 has positive optical power. The first group G1 includes the first lens L1, the first lens L1 has the positive optical power, an object side surface S1 of the first lens L1 is a convex surface at a paraxial position, an image side surface S2 of the first lens L1 is a concave surface at a paraxial position, and the object side surface S1 and the image side surface S2 are both aspherical surfaces. A beam entering from the aperture stop 10 is focused by using the first lens L1, so that a total length of the lens group can be shortened, thereby facilitating miniaturization of the lens group. The object side surface S1 and the image side surface S2 are both aspherical surfaces, to help correct an aberration. The first lens L1 is made of resin, to help reduce costs. A distance (also referred to as an optical length of the lens group 20) from the object side surface S1 of the first group G1 to an imaging surface of an object at infinity on the optical axis is TTL, and TTL/f$\leq$1, to help implement relatively short TTL.

The second group G2 has positive optical power. The second group G2 includes the second lens L2 and the third lens L3, and the second lens L2 and the third lens L3 are bonded as the doublet to eliminate a chromatic aberration. An object side surface S3 of the second lens L2 is a convex surface at a paraxial position, and an object side surface of the second lens L2 and an image side surface of the third lens L3 are bonded, to form a bonding surface S4. The bonding surface S4 is a concave surface with respect to the second lens L2 (the image side surface of the second lens L2 is a concave surface at a paraxial position). The bonding surface S4 is a convex surface with respect to the third lens L3 (the object side surface of the third lens L3 is a convex surface at a paraxial position). An image side surface S5 of the third lens L3 is a convex surface at a paraxial position. A beam is further focused after passing through the second group G2, so that the total length of the lens group can be shortened, thereby facilitating miniaturization of the lens group. The doublet is disposed, so that a chromatic aberration can be eliminated, thereby improving imaging quality. The object side surface S3 of the second lens L2, the bonding surface S4, and the image side surface S5 of the third lens L3 are all spherical surfaces, so that manufacturing difficulty of the doublet can be reduced, and bonding precision of the second lens L2 and the third lens L3 can also be improved, thereby helping converge, on one image surface, a beam passing through the lens group 20.

The second lens L2 and the third lens L3 are both made of glass, and the second lens L2 and the third lens L3 may be made of glass with different refractive indexes, to better eliminate a chromatic aberration, thereby improving imaging quality. A combined focal length of the second lens L2 and the third lens L3 is f23, and f23 meets: 0$\leq$f23/f$\leq$3. Optical power, a refractive index temperature coefficient, and the combined focal length are properly set, so that a chromatic aberration can be effectively corrected, and a temperature effect can also be reduced.

Dispersion coefficients (Abbe numbers) of the second lens L2 and the third lens L3 are respectively V2 and V3, V2 meets: 15$\leq$V2$\leq$100, and V3 meets: 15$\leq$V3$\leq$100. A chromatic aberration of the lens group 20 can be corrected through proper optical power allocation and dispersion coefficient selection. For example, if the dispersion coefficient V2 of the second lens L2 meets: 15$\leq$V2$\leq$40, and the dispersion coefficient V3 of the third lens L3 meets: 40$\leq$V3$\leq$100, the dispersion coefficients of the second lens L2 and the third lens L3 can be effectively compensated for. Alternatively, if the dispersion coefficient V2 of the second lens L2 meets: 40$\leq$V2$\leq$100, and the dispersion coefficient V3 of the third lens L3 meets: 15$\leq$V3$\leq$40, the dispersion coefficients of the second lens L2 and the third lens L3 can also be effectively compensated for. The dispersion coefficients that are of the second lens L2 and the third lens L3 and that are compensated for each other are selected to correct a chromatic aberration of the lens group 20, so that an axial chromatic aberration CA1 of the lens group 20 can be made less than or equal to 3 $\mu$m.

The third group G3 has negative optical power. The third group G3 includes the fourth lens L4, the first lens L4 has the negative optical power, an object side surface S6 of the fourth lens L4 is a concave surface at a paraxial position, an image side surface S7 of the fourth lens L4 is a concave surface at a paraxial position, and the object side surface S6 and the image side surface S7 are both aspherical surfaces. A beam is diffused by using the fourth lens L4, and relative positions between the first group G1, the second group G2, the third group G3, and the fourth group G4 may be adjusted, to implement a long focal length of a high multiple (the high multiple is greater than or equal to 5x, and even can reach at least 10x). The object side surface S6 and the image side surface S7 are both aspherical surfaces, to help correct an aberration. The fourth lens L4 is made of resin, to help reduce costs.

The fourth group G4 has positive optical power. The fourth group G4 includes the fifth lens L5, the fifth lens L5 has the positive optical power, an object side surface S8 of the fifth lens L5 is a concave surface at a paraxial position, an image side surface S9 of the fifth lens L5 is a convex surface at a paraxial position, and the object side surface S8 and the image side surface S9 are both aspherical surfaces. The fifth lens L5 has the positive optical power, to help ensure a final focusing function, correct astigmatism, and control an incidence angle of a main light ray towards the image sensor. The object side surface S8 and the image side surface S9 are both aspherical surfaces, to help correct an aberration, and also help correct a peripheral aberration of an image, thereby improving imaging quality of the lens group. The fifth lens L5 is made of resin, to help reduce costs.

An aspherical curve equation of the lenses is represented as follows:

$$Z = \frac{cr^2}{1 + \sqrt{1 - (1+k)c^2 r^2}} + \sum_{i=2}^{n} A_{2i} r^{2i}$$

Z is a vector height parallel to a z-axis, r is a vertical distance between a point on an aspherical curve and the optical axis, c is a curvature at a vertex at which an aspherical surface intersects the optical axis, k is a conic coefficient, Ai is an $i^{th}$-order aspherical coefficient, and n is a total quantity of polynomial coefficients in a series.

The following further describes related lens parameters of the lens group in a specific application scenario, as shown in the following Table 4. Meanings of symbols in Table 4 are in one-to-one correspondence with the meanings given above. Details are not described herein again. In the following table, each surface corresponds to one surface spacing, and a value of the surface spacing is a spacing, between the surface and a neighboring surface located on an image side of the surface, on the optical axis. For example, a surface spacing of the stop ST is -0.400 mm, indicating that a spacing between the stop ST and the object side surface S1 on the optical axis is -0.400 mm, where the minus sign "-" indicates that the stop ST is closer to the image side on the optical axis than the object side surface S1; and a surface spacing of the object side surface S1 is 0.787 mm, indicating that a spacing between the object side surface S1 and the object side surface S2 on the optical axis is 0.787 mm, where the object side surface S1 is closer to the object side on the optical axis than the object side surface S2. By analogy, details are not described again.

**Table 4**

| Value instance 2 (length unit: mm) TTL/f=1; f23/f=0.79; SP4/LT= 0.146; \|f/R51\|+\|f/R52\|=2.81; | | | | | | | |
|---|---|---|---|---|---|---|---|
| Surface number | Description | Surface type | Curvature radius | Surface spacing | Material | Refractive index | Dispersion coefficient |
| Object surface | / | Plane | / | / | / | / | / |
| ST | Aperture stop | Plane | / | -0.400 | / | / | / |
| Value instance 2 (length unit: mm) TTL/f=1; f23/f=0.79; SP4/LT= 0.146; \|f/R51\|+\|f/R52\|=2.81; | | | | | | | |
| Surface number | Description | Surface type | Curvature radius | Surface spacing | Material | Refractive index | Dispersion coefficient |
| S1 | First lens | Aspherical surface | 4.444 | 0.787 | Plastic | 1.5445 | 55.987 |
| S2 | | Aspherical surface | 13.070 | 0.100 | | | |
| S3 | Second lens | Spherical surface | 6.516 | 0.500 | Glass | 1.7174 | 29.51 |

(continued)

| Surface number | Description | Surface type | Curvature radius | Surface spacing | Material | Refractive index | Dispersion coefficient |
|---|---|---|---|---|---|---|---|
| S4 | Third lens | Spherical surface | 3.330 | 1.522 | Glass | 1.5891 | 61.163 |
| S5 | | Spherical surface | -36.770 | 0.100 | | | |
| S6 | Fourth lens | Aspherical surface | 18.551 | 1.290 | Plastic | 1.5445 | 55.987 |
| S7 | | Aspherical surface | 2.360 | 2.123 | | | |
| S8 | Fifth lens | Aspherical surface | -17.187 | 2.669 | Plastic | 1.5445 | 55.987 |
| S9 | | Aspherical surface | -7.384 | 0.300 | | | |
| S10 | Infrared cut-off filter | Plane | / | 0.210 | / | / | / |
| S11 | | Plane | | 4.900 | | | |
| S12 | Image sensor (image surface) | Plane | / | / | / | / | / |

The following Table 5 and Table 6 further give a conic constant K and an aspherical coefficient that correspond to each lens surface of the lens group in this specific example (in an example, there is an aspherical coefficient of a total of three orders). In Table 6, ImgH is a maximum image height of the lens group, TTL is a distance from a surface that is of the first lens and that faces the object side to the image surface on the optical axis, f1 is a focal length of the first lens, f2 is a focal length of the second lens, f3 is a focal length of the third lens, f4 is a focal length of the fourth lens, and f5 is a focal length of the fifth lens. Details are shown in the following Table 5 and Table 6:

**Table 5**

| Surface number | K | A4 | A6 |
|---|---|---|---|
| S1 | -4.711E-011 | 4.963E-004 | 1.750E-005 |
| S2 | -1.262E-010 | 1.132E-003 | -3.173E-005 |
| S3 | 0 | 0 | 0 |
| S4 | 0 | 0 | 0 |
| S5 | 0 | 0 | 0 |
| S6 | -9.822E-011 | -6.114E-003 | 2.926E-004 |
| S7 | -1.825E-010 | -1.287E-002 | -1.852E-004 |
| S8 | 3.763E-010 | -5.541E-003 | -6.871E-004 |
| S9 | -6.408E-011 | -3.338E-003 | -1.640E-004 |

**Table 6**

| Parameter | TTL | ImgH | f | f1 | f2 | f3 | f4 | f5 |
|---|---|---|---|---|---|---|---|---|
| Value (mm) | 14.50 | 2.8 | 14.50 | 11.94 | 21.87 | -44.21 | -5.09 | 21.62 |

Based on Table 4 to Table 6, the following describes an experimental test result of the lens group in this example of this disclosure.

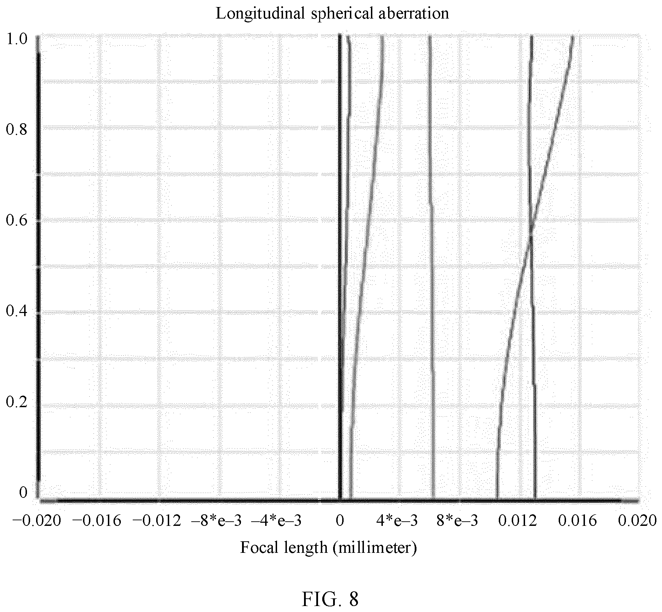

FIG. 8 to FIG. 11 respectively show simulation results of a spherical aberration (spherical aber), a field curve (field Curves), distortion (DiSTrtion), and an off-axis chromatic aberration according to examples of this disclosure. It can be seen from the simulation results that, in this example, on a premise that the lens group 20 meets a small size and a long focal length of a high multiple, an axial chromatic aberration (a longitudinal spherical aberration) of the lens group 20 is less than 16 $\mu$m, an off-axis chromatic aberration of the lens group 20 is less than 1 $\mu$m, and a distortion value of the lens group 20 is relatively good, so that a high-definition imaging requirement can also be ensured in a long-focus scenario.

Specifically, in FIG. 8, several curves respectively represent spherical aberrations caused after light of different wavelengths passes through the lens group, a vertical coordinate is a distance and is specifically a distance that is from an optical label of light of each wavelength to the optical axis and that is obtained when the light of each wavelength is incident along the optical axis, and a horizontal coordinate is a spherical aberration (a chromatic spherical aberration). It can be seen from the figure that the spherical aberrations caused after the light of the different wavelengths passes through the lens group are all less than 16 $\mu$m.

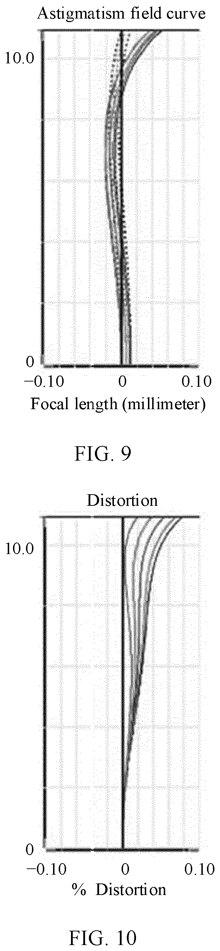

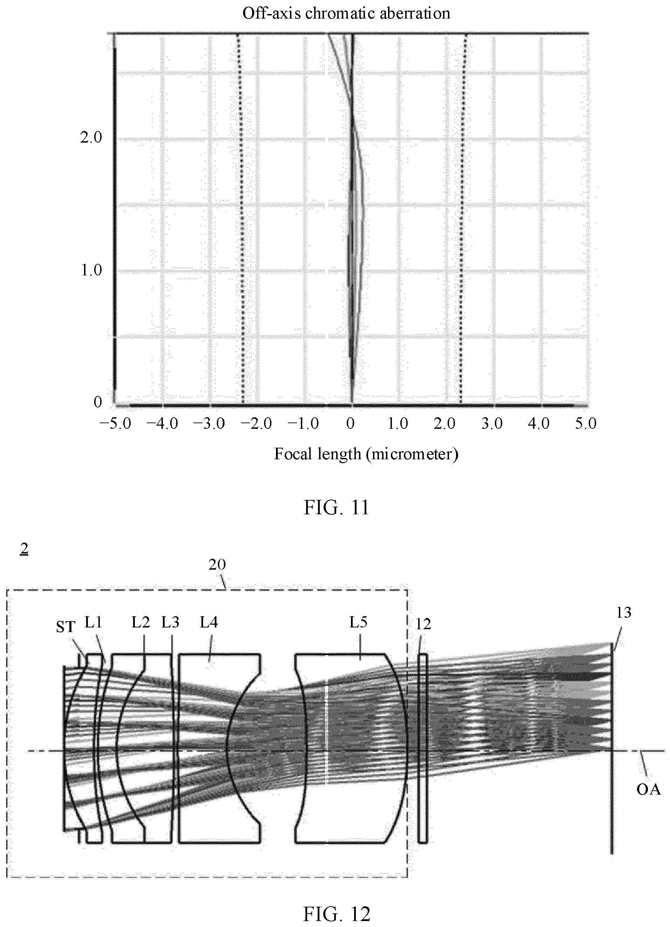

FIG. 9 shows astigmatism field curves, the curves respectively represent field curves caused after light of different wavelengths passes through the lens group, a horizontal coordinate is a field of view, and a vertical coordinate is an image height, namely, different image heights caused after light of each wavelength is incident to the lens group along different field of view positions. FIG. 10 shows distortion curves, the several curves respectively represent distortion caused after light of different wavelengths passes through the lens group, a vertical coordinate is a field of view, and a horizontal coordinate is a distortion value. The distortion value is a value that is obtained by subtracting an ideal image height from an actual image height and then dividing an obtained difference by the ideal image height and that is obtained after light of each wavelength passes through the lens group. In FIG. 11, several curves respectively represent off-axis chromatic aberrations caused after light of different wavelengths passes through the lens group, a vertical coordinate is a distance and is specifically a distance that is from an optical label of light of each wavelength to the optical axis and that is obtained when the light of each wavelength is incident along the optical axis, and a horizontal coordinate is an off-axis chromatic aberration. It can be seen from the figure that the off-axis chromatic aberrations caused after the light of the different wavelengths passes through the lens group are all less than 1 $\mu$m.

FIG. 12 shows that a beam converges on one image surface (image sensor) after passing through the lens group 20 and the light filter 12.

In the foregoing example, a glass-plastic mixed lens group structure is used, and materials, shapes, thicknesses, chromatic aberration coefficients, optical power, and the like of the groups are properly allocated, so that dispersion of the lens group can be reduced, and a temperature effect of a long-focus photographing lens group can be effectively improved. In this way, light rays of different wavelengths can be focused on one image surface after passing through the lens group 20, thereby improving imaging performance and also making the long-focus lens group more compact. A long focal length can be implemented by using only a limited quantity of groups (or lenses), so that a thickness of the module 2 can be less than 68 mm. Specifically, an off-axis chromatic aberration CA1 of the lens group 20 may be made less than or equal to 1 $\mu$m, an axial chromatic aberration CA2 of the lens group 20 may be made less than or equal to 3 $\mu$m, and a temperature drift coefficient $\triangle f/\triangle °C$ may meet: -0.5 $\mu$m/$°C \leq \triangle f/\triangle °C \leq 1.5$ $\mu$m/$°C$.

Example 3

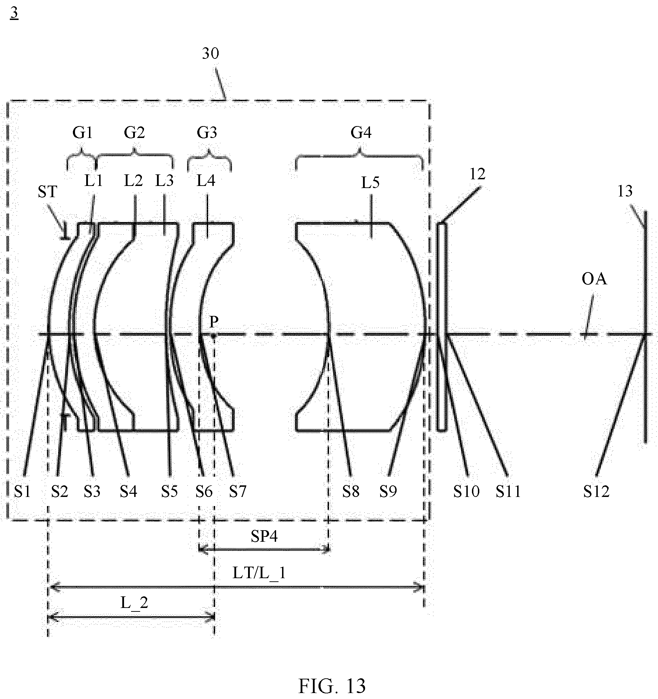

Refer to FIG. 13. In this implementation, a lens group 30 includes an aperture stop ST, a first group G1, a second group G2, a third group G3, and a fourth group G4 that are sequentially disposed from an object side to an image side along an optical axis OA. The first group G1 includes a first lens L1. The second group G2 includes a doublet including a second lens L2 and a third lens L3. The third group G3 includes a fourth lens L4. The fourth group G4 includes a fifth lens L5. The aperture stop ST, the first lens L1, the second lens L2, the third lens L3, the fourth lens L4, and the fifth lens L5 jointly constitute the lens group 30 in this example of this disclosure. The lens group 30, a light filter 12, and an image sensor 13 that are sequentially arranged from the object side to the image side along the optical axis constitute a camera module 3.

The first group G1 has positive optical power. The first group G1 includes the first lens L1, the first lens L1 has the positive optical power, an object side surface S1 of the first lens L1 is a convex surface at a paraxial position, an image side surface S2 of the first lens L1 is a concave surface at a paraxial position, and the object side surface S1 and the image side surface S2 are both aspherical surfaces. A beam entering from the aperture stop 10 is focused by using the first lens L1, so that a total length of the lens group can be shortened, thereby facilitating miniaturization of the lens group. The object side surface S1 and the image side surface S2 are both aspherical surfaces, to help correct an aberration. The first lens L1 is made of resin, to help reduce costs. A distance (also referred to as an optical length of the lens group 30) from the object side surface S1 of the first group G1 to an imaging surface of an object at infinity on the optical axis is TTL, and TTL/f≤0.95, to help implement relatively short TTL.

The second group G2 has positive optical power. The second group G2 includes the second lens L2 and the third lens L3, and the second lens L2 and the third lens L3 are bonded as the doublet to eliminate a chromatic aberration. An object side surface S3 of the second lens L2 is a convex surface at a paraxial position, and an object side surface of the second lens L2 and an image side surface of the third lens L3 are bonded, to form a bonding surface S4. The bonding surface S4 is a concave surface with respect to the second lens L2 (the image side surface of the second lens L2 is a concave surface at a paraxial position). The bonding surface S4 is a convex surface with respect to the third lens L3 (the object side surface of the third lens L3 is a convex surface at a paraxial position). An image side surface S5 of the third lens L3 is a convex surface at a paraxial position. A beam is further focused after passing through the second group G2, so that the total length of the lens group can be shortened, thereby facilitating miniaturization of the lens group. The doublet is disposed, so that a chromatic aberration can be eliminated, thereby improving imaging quality. The object side surface S3 of the second lens L2, the bonding surface S4, and the image side surface S5 of the third lens L3 are all spherical surfaces, so that manufacturing difficulty of the doublet can be reduced, and bonding precision of the second lens L2 and the third lens L3 can also be improved, thereby helping converge, on one image surface, a beam passing through the lens group 30.

The second lens L2 and the third lens L3 are both made of glass, and a refractive index temperature coefficient of glass is less than a refractive index temperature coefficient of plastic (the refractive index temperature coefficient of plastic is about 10 to 100 times the refractive index temperature coefficient of glass). Therefore, a lens made of glass can effectively compensate for a temperature effect. In addition, dispersion of the lens made of glass is relatively low, to help reduce dispersion. A relative refractive index temperature coefficient $\beta$ of glass meets: $-9\times10^{-5}\leq\beta\leq9\times10^{-5}$. The refractive index temperature coefficient $\beta$ is properly limited, and optical power is allocated, so that a temperature effect in the module 3 can be effectively eliminated. The second lens L2 and the third lens L3 may be made of glass with different refractive indexes, to better eliminate a chromatic aberration, thereby improving imaging quality. A combined focal length of the second lens L2 and the third lens L3 is f23, and f23 meets: $0\leq f23/f\leq3$. Optical power, a refractive index temperature coefficient, and the combined focal length are properly set, so that a chromatic aberration can be effectively corrected, and a temperature effect can also be reduced.

Dispersion coefficients (Abbe numbers) of the second lens L2 and the third lens L3 are respectively V2 and V3, V2 meets: $15\leq V2\leq100$, and V3 meets: $15\leq V3\leq100$. A chromatic aberration of the lens group 30 can be corrected through proper optical power allocation and dispersion coefficient selection. For example, if the dispersion coefficient V2 of the second lens L2 meets: $15\leq V2\leq40$, and the dispersion coefficient V3 of the third lens L3 meets: $40\leq V3\leq100$, the dispersion coefficients of the second lens L2 and the third lens L3 can be effectively compensated for. Alternatively, if the dispersion coefficient V2 of the second lens L2 meets: $40\leq V2\leq100$, and the dispersion coefficient V3 of the third lens L3 meets: $15\leq V3\leq40$, the dispersion coefficients of the second lens L2 and the third lens L3 can also be effectively compensated for. The dispersion coefficients that are of the second lens L2 and the third lens L3 and that are compensated for each other are selected to correct a chromatic aberration of the lens group 30, so that an axial chromatic aberration CA1 of the lens group 30 can be made less than or equal to 7 $\mu$m.

The third group G3 has negative optical power. The third group G3 includes the fourth lens L4, the first lens L4 has the negative optical power, an object side surface S6 of the fourth lens L4 is a convex surface at a paraxial position, an image side surface S7 of the fourth lens L4 is a concave surface at a paraxial position, and the object side surface S6 and the image side surface S7 are both aspherical surfaces. A beam is diffused by using the fourth lens L4, and relative positions between the first group G1, the second group G2, the third group G3, and the fourth group G4 may be adjusted, to implement a long focal length of a high multiple (the high multiple is greater than or equal to 5x, and even can reach at least 10x). The object side surface S6 and the image side surface S7 are both aspherical surfaces, to help correct an aberration. The fourth lens L4 is made of resin, to help reduce costs.

The fourth group G4 has positive optical power. The fourth group G4 includes the fifth lens L5, the fifth lens L5 has the positive optical power, an object side surface S8 of the fifth lens L5 is a concave surface at a paraxial position, an image side surface S9 of the fifth lens L5 is a convex surface at a paraxial position, and the object side surface S8 and the image side surface S9 are both aspherical surfaces. The fifth lens L5 has the positive optical power, to help ensure a final focusing function, correct astigmatism, and control an incidence angle of a main light ray towards the image sensor. The object side surface S8 and the image side surface S9 are both aspherical surfaces, to help correct an aberration, and also help correct a peripheral aberration of an image, thereby improving imaging quality of the lens group. The fifth lens L5 is made of resin, to help reduce costs.

An aspherical curve equation of the lenses is represented as follows:

$$Z = \frac{cr^2}{1 + \sqrt{1 - (1 + k)c^2 r^2}} + \sum_{i=2}^{n} A_{2i} r^{2i}$$

Z is a vector height parallel to a z-axis, r is a vertical distance between a point on an aspherical curve and the optical axis, c is a curvature at a vertex at which an aspherical surface intersects the optical axis, k is a conic coefficient, Ai is an $i^{th}$-order aspherical coefficient, and n is a total quantity of polynomial coefficients in a series.

The following further describes related lens parameters of the lens group in a specific application scenario, as shown in the following Table 1. Meanings of symbols in Table 1 are in one-to-one correspondence with the meanings given above. Details are not described herein again. In the following table, each surface corresponds to one surface spacing, and a value of the surface spacing is a spacing, between the surface and a neighboring surface located on an image side of the surface, on the optical axis. For example, a surface spacing of the stop ST is -0.400 mm, indicating that a spacing between the stop ST and the object side surface S1 on the optical axis is -0.400 mm, where the minus sign "-" indicates that the stop ST is closer to the image side on the optical axis than the object side surface S1; and a surface spacing of the object side surface S1 is 0.500 mm, indicating that a spacing between the object side surface S1 and the object side surface S2 on the optical axis is 0.500 mm, where the object side surface S1 is closer to the object side on the optical axis than the object side surface S2. By analogy, details are not described again.

**Table 7**

| Value instance 3 (length unit: mm) TTL/f=1; f23/f=1.07; SP4/LT=0.216; \|f/R51\|+\|f/R52\|=6.49; | | | | | | | |
|---|---|---|---|---|---|---|---|
| Surface number | Description | Surface type | Curvature radius | Surface spacing | Material | Refractive index | Dispersion coefficient |
| Object surface | / | Plane | / | / | / | / | / |
| ST | Aperture stop | Plane | / | -0.400 | / | / | / |
| S1 | First lens | Aspherical surface | 3.954 | 0.500 | Plastic | 1.5445 | 55.987 |
| S2 | | Aspherical surface | 4.822 | 0.100 | | | |
| S3 | Second lens | Spherical surface | 4.351 | 0.499 | Glass | 1.7174 | 29.51 |
| S4 | Third lens | Spherical surface | 2.787 | 1.751 | Glass | 1.5891 | 61.163 |
| S5 | | Spherical surface | 8.503 | 0.100 | | | |
| S6 | Fourth lens | Aspherical surface | 5.036 | 0.721 | Plastic | 1.6137 | 25.98 |
| S7 | | Aspherical surface | 3.749 | 3.124 | | | |
| S8 | Fifth lens | Aspherical surface | -4.301 | 2.349 | Plastic | 1.5445 | 55.987 |
| S9 | | Aspherical surface | -4.638 | 0.300 | | | |
| S10 | Infrared cut-off filter | Plane | / | 0.210 | / | / | / |
| S11 | | Plane | | 4.851 | | | |
| Value instance 3 (length unit: mm) TTL/f=1; f23/f=1.07; SP4/LT=0.216; \|f/R51\|+\|f/R52\|=6.49; | | | | | | | |
| Surface number | Description | Surface type | Curvature radius | Surface spacing | Material | Refractive index | Dispersion coefficient |
| S12 | Image sensor (image surface) | Plane | / | / | / | / | / |

The following Table 8 and Table 9 further give a conic constant K and an aspherical coefficient that correspond to each lens surface of the lens group in this specific example (in an example, there is an aspherical coefficient of a total of three orders). In Table 9, ImgH is a maximum image height of the lens group, TTL is a distance from a surface that is of the first lens and that faces the object side to the image surface on the optical axis, f1 is a focal length of the first lens, f2 is a focal length of the second lens, f3 is a focal length of the third lens, f4 is a focal length of the fourth lens, and f5 is a focal length of the fifth lens. Details are shown in the following Table 8 and Table 9:

**Table 8**

| Surface number | K | A4 | A6 |
|---|---|---|---|
| S1 | -9.962E-011 | 1.046E-003 | 3.573E-005 |
| S2 | -2.770E-010 | 2.713E-003 | 2.118E-005 |
| S3 | 0 | 0 | 0 |
| S4 | 0 | 0 | 0 |
| S5 | 0 | 0 | 0 |
| S6 | 1.566E-010 | 1.011E-002 | -2.905E-004 |
| S7 | 1.806E-010 | 1.325E-002 | 4.327E-004 |
| S8 | 1.587E-010 | -5.008E-003 | -1.455E-003 |
| S9 | 1.820E-010 | -2.067E-003 | -2.199E-004 |

**Table 9**

| Parameter | TTL | ImgH | f | f1 | f2 | f3 | f4 | f5 |
|---|---|---|---|---|---|---|---|---|
| Value (mm) | 14.49 | 2.8 | 14.50 | 33.41 | 13.13 | -8.33 | -30.22 | 73.96 |

Based on Table 7 to Table 9, the following describes an experimental test result of the lens group in this example of this disclosure.

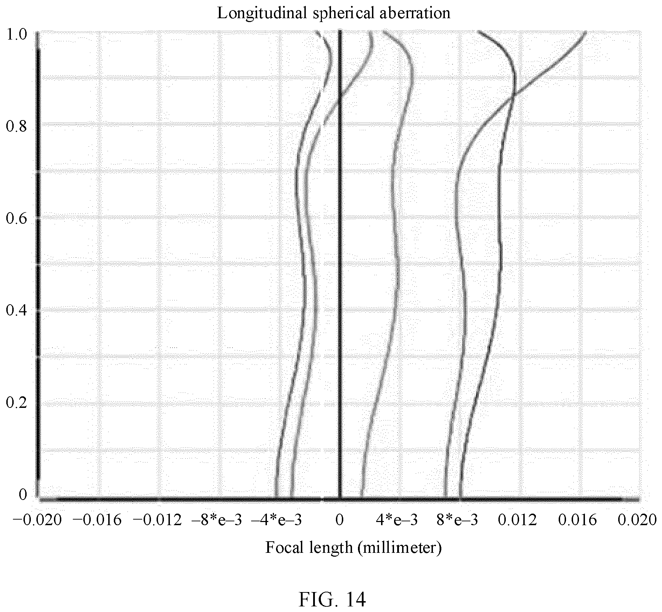

FIG. 14 to FIG. 17 respectively show simulation results of a spherical aberration (spherical aber), a field curve (field Curves), distortion (DiSTrtion), and an off-axis chromatic aberration according to examples of this disclosure. It can be seen from the simulation results that, in this example, on a premise that the lens group 30 meets a small size and a long focal length of a high multiple, an axial chromatic aberration (a longitudinal spherical aberration) of the lens group 30 is less than 20 μm, an off-axis chromatic aberration of the lens group 30 is less than 1 μm, and a distortion value of the lens group 30 is relatively good, so that a high-definition imaging requirement can also be ensured in a long-focus scenario.

Specifically, in FIG. 14, several curves respectively represent spherical aberrations caused after light of different wavelengths passes through the lens group, a vertical coordinate is a distance and is specifically a distance that is from an optical label of light of each wavelength to the optical axis and that is obtained when the light of each wavelength is incident along the optical axis, and a horizontal coordinate is a spherical aberration (a chromatic spherical aberration). It can be seen from the figure that the spherical aberrations caused after the light of the different wavelengths passes through the lens group are all less than 20 μm.

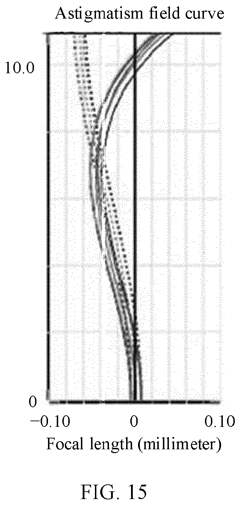

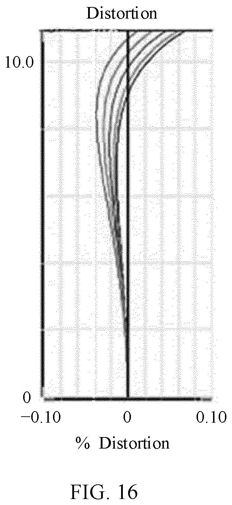

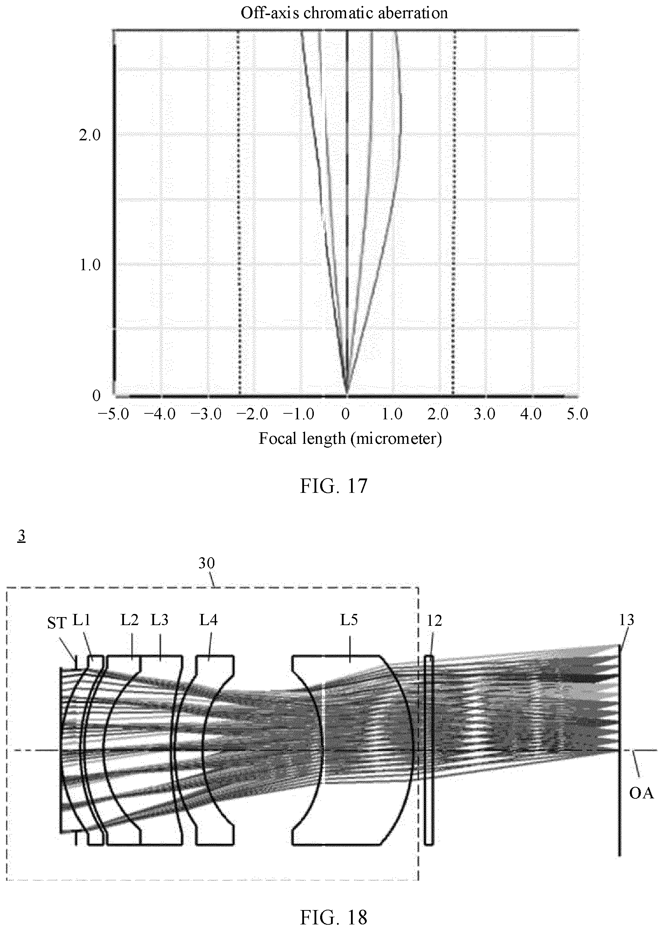

FIG. 15 shows astigmatism field curves, the curves respectively represent field curves caused after light of different wavelengths passes through the lens group, a horizontal coordinate is a field of view, and a vertical coordinate is an image height, namely, different image heights caused after light of each wavelength is incident to the lens group along different field of view positions. FIG. 16 shows distortion curves, the several curves respectively represent distortion caused after light of different wavelengths passes through the lens group, a vertical coordinate is a field of view, and a horizontal coordinate is a distortion value. The distortion value is a value that is obtained by subtracting an ideal image height from an actual image height and then dividing an obtained difference by the ideal image height and that is obtained after light of each wavelength passes through the lens group. In FIG. 17, several curves respectively represent off-axis chromatic aberrations caused after light of different wavelengths passes through the lens group, a vertical coordinate is a distance and is specifically a distance that is from an optical label of light of each wavelength to the optical axis and that is obtained when the light of each wavelength is incident along the optical axis, and a horizontal coordinate is an off-axis chromatic aberration. It can be seen from the figure that the off-axis chromatic aberrations caused after the light of the different wavelengths passes through the lens group are all less than 1.5 μm.

FIG. 18 shows that a beam converges on one image surface S11 after passing through the lens group 30 and the light filter 12.

In the foregoing example, a glass-plastic mixed lens group structure is used, and materials, shapes, thicknesses, chromatic aberration coefficients, optical power, and the like of the groups are properly allocated, so that dispersion of the lens group can be reduced, and a temperature effect of a long-focus photographing lens group can be effectively improved. In this way, light rays of different wavelengths can be focused on one image surface after passing through the lens group 30, thereby improving imaging performance and also making the long-focus lens group more compact. A long focal length can be implemented by using only a limited quantity of groups (or lenses), so that a thickness of the module 3 can be less than 68 mm. Specifically, an off-axis chromatic aberration CA1 of the lens group 30 may be made less than or equal to 1 $\mu$m, an axial chromatic aberration CA2 of the lens group 30 may be made less than or equal to 7 $\mu$m, and a temperature drift coefficient $\triangle f/\triangle °C$ may meet: -0.5 $\mu$m/°C$\leq\triangle f/\triangle °C\leq$1.5 $\mu$m/°C.

## Example 4

Example 4 of this disclosure provides a camera module. The camera module includes the lens group provided in any one of Examples 1 to 3. The camera module may be an apparatus such as a camera module or an infrared camera module. The lens group is disposed in the camera module, so that a lens group length of the camera module can be shortened, and a camera module with a long focal length, a small size, temperature insensitivity, and high imaging quality can be implemented on a premise of ensuring that the camera module is relatively thin. In addition, the camera module may further include a light filter and an image sensor, disposed on a side that is of the lens group and that faces an image side, and the image sensor is located on the image side of the lens group. The light filter may be an infrared cut-off filter, and infrared light is cut off and filtered by using the infrared cut-off filter.

## Example 5

Example 5 of this disclosure provides a terminal device. The terminal device includes the camera module provided in Example 4. The camera module with the lens group is disposed in the terminal device, so that various photographing application scenarios of a higher focal length multiple (especially, a long focal length of at least 5x) can be implemented, thereby improving photographing quality, and enhancing a function of the terminal device; and a thickness of the terminal device can be effectively reduced, thereby improving user experience. The terminal device may be a device such as a mobile phone or a tablet computer.

## Example 6

Example 6 of this disclosure provides a mobile phone. The mobile phone includes the camera module provided in Example 4.

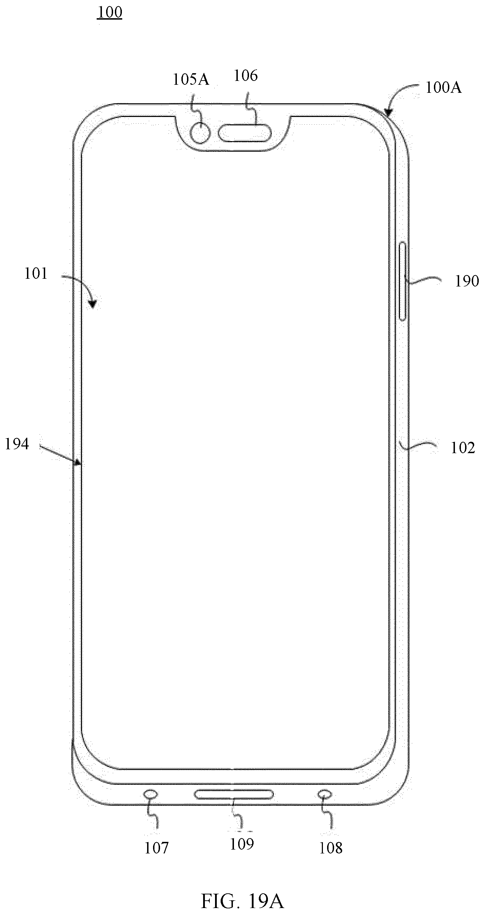

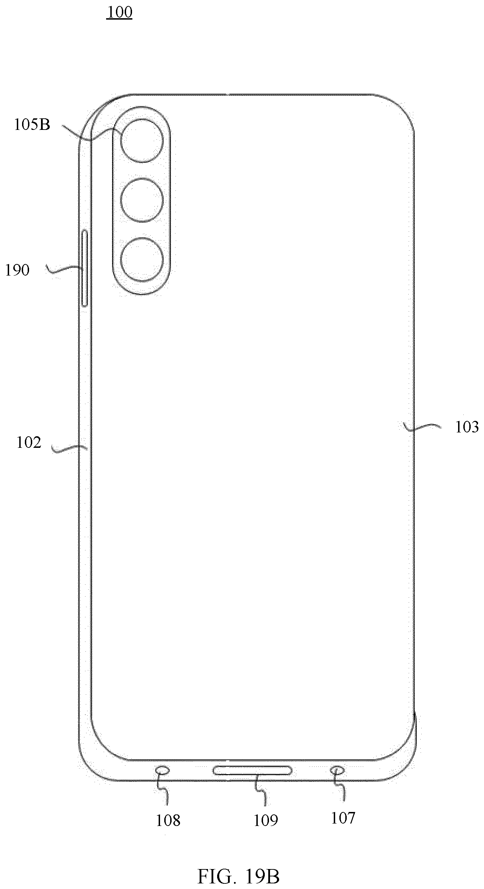

As shown in FIG. 19A and FIG. 19B, a mobile phone 100 may include a housing 100A. The housing 100A may include a front cover 101, a rear cover 103, and a bezel 102. The front cover 101 and the rear cover 103 are oppositely disposed. The bezel 102 surrounds the front cover 101 and the rear cover 103 and connects the front cover 101 and the rear cover 102 together. The front cover 101 may be a glass cover, and a display 194 is disposed under the front cover 101. In the mobile phone 100, input/output components may be disposed around the outer circumference of the housing 100A. For example, a front-facing camera (a lens group located on a surface on which the display is located) 105A and a telephone receiver 106 may be disposed at the top of the front cover 101. A push-button 190 may be disposed on an edge of the bezel 102, and a microphone, a speaker 108, and a USB interface 109 may be disposed on a bottom edge of the bezel 101. For example, at least one rear-facing camera (a lens group located on a surface that faces away from the display) 105B may be disposed at the top of the rear cover 102.

The camera module with the lens group is disposed in the mobile phone, so that a lens group length of the camera module can be shortened, and a camera module with a long focal length, a small size, temperature insensitivity, and high imaging quality can be implemented on a premise of ensuring that the camera module is relatively thin. In another example, the front-facing camera 105A of the mobile phone 100 may be disposed under the display 194, that is, the front-facing camera 105A is an under display camera. Alternatively, in another example, displays 194 are disposed on both the front cover 101 and the rear cover 103 of the mobile phone 100.

The camera module with the lens group is disposed in the mobile phone, so that various photographing application scenarios of a higher focal length multiple (especially, a long focal length of at least 5x) can be implemented, thereby improving photographing quality; and a thickness of the mobile phone can be effectively reduced, thereby enhancing a function of the terminal device, and improving user experience.

Several examples are shown above, but a lens structure is not limited to the content disclosed in the foregoing examples. For example, in some examples, any one or more of the first lens, the fourth lens, and the fifth lens are made of glass, and one or both of the second lens and the third lens are made of plastic. In some examples, any one or more of the object side surface S3 of the second lens L2, the bonding surface S4 of the second lens L2 and the third lens L3, and the image side surface S5 of the third lens L3 are aspherical surfaces, and/or any one or more of the object side surface S1 of the first lens L1, the image side surface S2 of the first lens L1, the object side surface S6 of the fourth lens L4, the image side surface S7 of the fourth lens L4, the object side surface S8 of the fifth lens L5, and the image side surface S9 of the fifth lens L5 are spherical surfaces. In some examples, a shape of any side surface of the first lens to the fifth lens is not limited to the concave surface or the convex surface disclosed in the foregoing examples.

It can be learned that, in the foregoing aspects, optical power of a lens in each group is designed in matching with the doublet, so that a long-focus lens group can be obtained, to help improve lens group imaging quality in a compact system, and implement an imaging effect of a long focal length, a small chromatic aberration, a small temperature drift, and a small size. Therefore, in a scenario such as video recording or photographing preview, a temperature drift does not need to be corrected by using an algorithm, and the long-focus lens group can be used in a scenario in which a terminal device takes and records an image, for example, a lens group of a portable electronic product such as a mobile phone, a tablet computer, or a monitor is used to take an external video or photo, including various photographing application scenarios in different large fields of view.

## Claims

1. A lens group (10, 20, 30), comprising a first group (G1), a second group (G2), a third group (G3), and a fourth group (G4) that are sequentially disposed from an object side to an image side along an optical axis (OA), wherein

   the first group (G1) has positive optical power;
   the second group (G2) has positive optical power, the second group (G2) comprises a second lens (12) and a third lens (L3) that are sequentially disposed from the object side to the image side along the optical axis (OA), and the second lens (L2) and the third lens (L3) are bonded as a doublet;
   the third group (G3) has negative optical power; and
   an optical length of the lens group (10, 20, 30) is TTL, an effective focal length of the lens group (10, 20, 30) is f, and TTL and f meet:

   $$TTL/f \leq 1,$$

   **characterized in that**
   the second lens (L2) and the third lens (L3) of the second group (G2) are made of glass,
   wherein the first group (G1), the third group (G3) and the fourth group (G4) are made of plastic,
   wherein the first group (G1) is a first lens (L 1), the third group (G3) is a fourth lens (L4), the fourth group (G4) is a fifth lens (L5), and
   wherein a length of the lens group (10, 20, 30) is L_1, a length from a center of gravity of the lens group (10, 20, 30) to a vertex position of an object side surface of the first group (G1) is L_2, and L_1 and L_2 meet:

   $$0.4 \times L\_1 \leq L\_2 \leq 0.6 \times L\_1.$$

2. The lens group (10, 20, 30) according to claim 1, wherein dispersion coefficients of the second lens (L2) and the third lens (L3) are respectively V2 and V3, V2 meets: $15 \leq V2 \leq 100$, and V3 meets: $15 \leq V3 \leq 100$.

3. The lens group (10, 20, 30) according to claim 2, wherein V2 and V3 meet: $15 \leq V2 \leq 40$, and $40 \leq V3 \leq 100$, or V2 and V3 meet: $40 \leq V2 \leq 100$ and $15 \leq V3 \leq 40$.

4. The lens group (10, 20, 30) according to claim 1, wherein a curvature radius of an object side surface (S8) of the fifth lens (L5) is R51, a curvature radius of an image side surface (S9) of the fifth lens (L5) is R52, and R51 and R52 meet:

   $$|f/R51| + |f/R52| \leq 8.$$

5. The lens group (10, 20, 30) according to claim 1, wherein a combined focal length of the second lens (L2) and the third lens (L3) is f23, and f23 meets:

   $$0 \leq f23/f \leq 3.$$

6. The lens group (10, 20, 30) according to claim 1, wherein a spacing from a center position of an image side surface of the third group (G3) to a center position of an object side surface of the fourth group (G4) is SP4, a spacing from a center position of an object side surface of the first group (G1) to a center position of an image side surface of the fourth group (G4) is LT, and SP4 and LT meet:

$$SP4/LT \leq 0.3.$$

**7.** The lens group (10, 20, 30) according to claim 1, wherein an off-axis chromatic aberration of the lens group (10, 20, 30) is CA1, an axial chromatic aberration of the lens group (10, 20, 30) is CA2, CA1 meets: CA1$\leq$1 $\mu$m, and CA2 meets: CA2$\leq$10 $\mu$m.

**8.** The lens group (10, 20, 30) according to claim 1,
wherein the second lens (L2) and the third lens (L3) have a relative refractive index temperature coefficient $\beta$, and $\beta$ meets:

$$-9 \times 10^{-5} \leq \beta \leq 9 \times 10^{-5}.$$

**9.** The lens group (10, 20, 30) according to any one of claims 1 to 8, wherein a bonding surface of the second lens (L2) and the third lens (L3) is a spherical surface, a curvature radius of the bonding surface is R23, and R23 meets:

$$0 \text{ mm} \leq R23 \leq 10 \text{ mm}.$$

**10.** The lens group (10, 20, 30) according to claim 1, wherein a temperature drift coefficient of the lens group (10, 20, 30) is $\triangle f / \triangle °C$, and $\triangle f / \triangle °C$ meets:

$$-0.5 \text{ }\mu\text{m/°C} \leq \Delta f / \Delta °C \leq 1.5 \text{ }\mu\text{m/°C}.$$

**11.** The lens group (10, 20, 30) according to claim 1, wherein the lens group (10, 20, 30) further comprises a stop (ST), and the stop (ST) is located on a side that is of the first group (G1) and that faces the image side; or the stop (ST) is located on a side that is of the first group (G1) and that faces the object side.

**12.** The lens group (10, 20, 30) according to claim 1, wherein an object side surface (S1) of the first lens (L1) is a convex surface at a paraxial position.

**13.** A camera module (1, 2, 3), comprising an image sensor (13), wherein the camera module (1, 2, 3) further comprises the lens group (10, 20, 30) according to any one of claims 1 to 12, and the image sensor (13) is located on an image side of the lens group (10, 20, 30).

**14.** A terminal device (100), comprising the camera module (1, 2, 3) according to claim 13.

**Patentansprüche**

**1.** Linsengruppe (10, 20, 30), umfassend eine erste Gruppe (G1), eine zweite Gruppe (G2), eine dritte Gruppe (G3) und eine vierte Gruppe (G4), die entlang einer optischen Achse (OA) von einer Objektseite zu einer Bildseite nacheinander angeordnet sind, wobei

die erste Gruppe (G1) eine positive optische Leistung aufweist; die zweite Gruppe (G2) eine positive optische Leistung aufweist, die zweite Gruppe (G2) eine zweite Linse (L2) und eine dritte Linse (L3) umfasst, die entlang der optischen Achse (OA) von der Objektseite zu der Bildseite nacheinander angeordnet sind, und die zweite Linse (L2) und die dritte Linse (L3) als ein Dublett verbunden sind;
die dritte Gruppe (G3) eine negative optische Leistung aufweist; und
eine optische Länge der Linsengruppe (10, 20, 30) TTL ist, eine effektive Brennweite der Linsengruppe (10, 20, 30) f ist, und TTL und f Folgendes erfüllen:

$$TTL/f \leq 1,$$

**dadurch gekennzeichnet, dass**
die zweite Linse (L2) und die dritte Linse (L3) der zweiten Gruppe (G2) aus Glas hergestellt sind,
wobei die erste Gruppe (G1), die dritte Gruppe (G3) und die vierte Gruppe (G4) aus Kunststoff hergestellt sind,
wobei die erste Gruppe (G1) eine erste Linse (L1) ist, die dritte Gruppe (G3) eine vierte Linse (L4) ist, die vierte Gruppe (G4) eine fünfte Linse (L5) ist, und
wobei eine Länge der Linsengruppe (10, 20, 30) L_1 ist, eine Länge von einem Schwerpunkt der Linsengruppe (10, 20, 30) zu einer Scheitelpunktposition einer Objektseitenfläche der ersten Gruppe (G1) L_2 ist, und L_1 und L_2 Folgendes erfüllen:

$$0,4 \times L\_1 \leq L\_2 \leq 0,6 \times L\_1.$$

2. Linsengruppe (10, 20, 30) nach Anspruch 1, wobei Dispersionskoeffizienten der zweiten Linse (L2) und der dritten Linse (L3) V2 bzw. V3 sind, V2 Folgendes erfüllt: $15 \leq V2 \leq 100$, und V3 Folgendes erfüllt: $15 \leq V3 \leq 100$.

3. Linsengruppe (10, 20, 30) nach Anspruch 2, wobei V2 und V3 Folgendes erfüllen: $15 \leq V2 \leq 40$ und $40 \leq V3 \leq 100$; oder V2 und V3 Folgendes erfüllen: $40 \leq V2 \leq 100$ und $15 \leq V3 \leq 40$.

4. Linsengruppe (10, 20, 30) nach Anspruch 1, wobei ein Krümmungsradius einer Objektseitenfläche (S8) der fünften Linse (L5) R51 ist, ein Krümmungsradius einer Bildseitenfläche (S9) der fünften Linse (L5) R52 ist, und R51 und R52 Folgendes erfüllen:

$$|f/R51| + |f/R52| \leq 8.$$

5. Linsengruppe (10, 20, 30) nach Anspruch 1, wobei eine kombinierte Brennweite der zweiten Linse (L2) und der dritten Linse (L3) f23 ist, und f23 Folgendes erfüllt:

$$0 \leq f23/f \leq 3.$$

6. Linsengruppe (10, 20, 30) nach Anspruch 1, wobei ein Abstand von einer Mittelposition einer Bildseitenfläche der dritten Gruppe (G3) zu einer Mittelposition einer Objektseitenfläche der vierten Gruppe (G4) SP4 ist, ein Abstand von einer Mittelposition einer Objektseitenfläche der ersten Gruppe (G1) zu einer Mittelposition einer Bildseitenfläche der vierten Gruppe (G4) LT ist und SP4 und LT Folgendes erfüllen:

$$SP4/LT \leq 0,3.$$

7. Linsengruppe (10, 20, 30) nach Anspruch 1, wobei eine außeraxiale chromatische Aberration der Linsengruppe (10, 20, 30) CA1 ist, eine axiale chromatische Aberration der Linsengruppe (10, 20, 30) CA2 ist, CA1 Folgendes erfüllt: $CA1 \leq 1\ \mu m$, und CA2 Folgendes erfüllt: $CA2 \leq 10\ \mu m$.

8. Linsengruppe (10, 20, 30) nach Anspruch 1,
wobei die zweite Linse (L2) und die dritte Linse (L3) einen relativen Brechungsindex-Temperaturkoeffizienten $\beta$ aufweisen und $\beta$ Folgendes erfüllt:

$$-9 \times 10^{-5} \leq \beta \leq 9 \times 10^{-5}.$$

9. Linsengruppe (10, 20, 30) nach einem der Ansprüche 1 bis 8, wobei eine Verbindungsfläche der zweiten Linse (L2) und der dritten Linse (L3) eine sphärische Fläche ist, ein Krümmungsradius der Verbindungsfläche R23 ist und R23 Folgendes erfüllt:

$$0\ mm \leq R23 \leq 10\ mm.$$

10. Linsengruppe (10, 20, 30) nach Anspruch 1, wobei ein Temperaturdriftkoeffizient der Linsengruppe (10, 20, 30) $\Delta f/\Delta°C$ ist und $\Delta f/\Delta°C$ Folgendes erfüllt:

$$-0,5\ \mu m/°C \leq \Delta f/\Delta°C \leq 1,5\ \mu m/°C.$$

11. Linsengruppe (10, 20, 30) nach Anspruch 1, wobei die Linsengruppe (10, 20, 30) ferner eine Blende (ST) umfasst, und sich die Blende (ST) auf einer Seite befindet, die zu der ersten Gruppe (G1) gehört und die der Bildseite zugewandt ist;

oder sich die Blende (ST) auf einer Seite befindet, die zu der ersten Gruppe (G1) gehört und die der Objektseite zugewandt ist.

12. Linsengruppe (10, 20, 30) nach Anspruch 1, wobei eine Objektseitenfläche (S1) der ersten Linse (L1) eine konvexe Fläche in einer paraxialen Position ist.

13. Kameramodul (1, 2, 3), umfassend einen Bildsensor (13), wobei das Kameramodul (1, 2, 3) ferner die Linsengruppe (10, 20, 30) nach einem der Ansprüche 1 bis 12 umfasst, und sich der Bildsensor (13) auf einer Bildseite der Linsengruppe (10, 20, 30) befindet.

14. Endgerätevorrichtung (100), umfassend das Kameramodul (1, 2, 3) nach Anspruch 13.

**Revendications**

1. Groupe de lentilles (10, 20, 30), comprenant un premier groupe (G1), un deuxième groupe (G2), un troisième groupe (G3) et un quatrième groupe (G4) qui sont disposés séquentiellement d'un côté objet à un côté image le long d'un axe optique (OA), dans lequel

le premier groupe (G1) a une puissance optique positive ;
le deuxième groupe (G2) a une puissance optique positive, le deuxième groupe (G2) comprend une deuxième lentille (L2) et une troisième lentille (L3) qui sont disposées séquentiellement du côté objet au côté image le long de l'axe optique (OA), et la deuxième lentille (L2) et la troisième lentille (L3) sont collées sous forme d'un doublet ;
le troisième groupe (G3) a une puissance optique négative ; et la longueur optique du groupe de lentilles (10, 20, 30) est TTL, la distance focale effective du groupe de lentilles (10, 20, 30) est f, et TTL et f satisfait à :

$$TTL/f \leq 1,$$

**caractérisé en ce que**
la deuxième lentille (L2) et la troisième lentille (L3) du deuxième groupe (G2) sont en verre,
dans lequel le premier groupe (G1), le troisième groupe (G3) et le quatrième groupe (G4) sont en plastique,
dans lequel le premier groupe (G1) est une première lentille (L1), le troisième groupe (G3) est une quatrième lentille (L4), le quatrième groupe (G4) est une cinquième lentille (L5), et
dans lequel une longueur du groupe de lentilles (10, 20, 30) est L_1, une longueur du centre de gravité du groupe de lentilles (10, 20, 30) à une position de sommet d'une surface côté objet du premier groupe (G1) est L_2, et L_1 et L_2 satisfont à :

$$0,4 \times L\_1 \leq L\_2 \leq 0,6 \times L\_1.$$

2. Groupe de lentilles (10, 20, 30) selon la revendication 1, dans lequel les coefficients de dispersion de la deuxième lentille (L2) et de la troisième lentille (L3) sont respectivement V2 et V3, V2 satisfait à : $15 \leq V2 \leq 100$ et V3 satisfait à : $15 \leq V3 \leq 100$.

3. Groupe de lentilles (10, 20, 30) selon la revendication 2, dans lequel V2 et V3 satisfont à : $15 \leq V2 \leq 40$ et $40 \leq V3 \leq 100$ ; ou V2 et V3 satisfont à : $40 \leq V2 \leq 100$ et $15 \leq V3 \leq 40$.

4. Groupe de lentilles (10, 20, 30) selon la revendication 1, dans lequel le rayon de courbure d'une surface côté objet (S8) de la cinquième lentille (L5) est R51, le rayon de courbure d'une surface côté image (S9) de la cinquième lentille (L5) est R52, et R51 et R52 satisfont à :

$$|f/R51| + |f/R52| \leq 8.$$

5. Groupe de lentilles (10, 20, 30) selon la revendication 1, dans lequel la distance focale combinée de la deuxième lentille (L2) et de la troisième lentille (L3) est f23, et f23 satisfait à :

$$0 \leq f23/f \leq 3.$$

**6.** Groupe de lentilles (10, 20, 30) selon la revendication 1, dans lequel l'espacement entre une position centrale de la surface côté image du troisième groupe (G3) et une position centrale de la surface côté objet du quatrième groupe (G4) est SP4, un espacement entre une position centrale de la surface côté objet du premier groupe (G1) et une position centrale de la surface côté image du quatrième groupe (G4) est LT, et SP4 et LT satisfont à :

$$\mathrm{SP4/LT} \leq 0,3.$$

**7.** Groupe de lentilles (10, 20, 30) selon la revendication 1, dans lequel une aberration chromatique hors axe du groupe de lentilles (10, 20, 30) est CA1, une aberration chromatique axiale du groupe de lentilles (10, 20, 30) est CA2, CA1 satisfait à : CA1$\leq$1 $\mu$m et CA2 satisfait à : CA2$\leq$10 $\mu$m.

**8.** Groupe de lentilles (10, 20, 30) selon la revendication 1, dans lequel la deuxième lentille (L2) et la troisième lentille (L3) ont un coefficient de température d'indice de réfraction relatif $\beta$, et $\beta$ satisfait à :

$$-9 \times 10^{-5} \leq \beta \leq 9 \times 10^{-5}.$$

**9.** Groupe de lentilles (10, 20, 30) selon l'une quelconque des revendications 1 à 8, dans lequel la surface de collage de la deuxième lentille (L2) et de la troisième lentille (L3) est une surface sphérique, le rayon de courbure de la surface de collage est R23, et R23 satisfait à :

$$0 \ \mathrm{mm} \leq \mathrm{R23} \leq 10 \ \mathrm{mm}.$$

**10.** Groupe de lentilles (10, 20, 30) selon la revendication 1, dans lequel un coefficient de dérive thermique du groupe de lentilles (10, 20, 30) est $\Delta f/\Delta°C$, et $\Delta f/\Delta°C$ satisfait à :

$$-0,5 \ \mu\mathrm{m}/°\mathrm{C} \leq \Delta f/\Delta°\mathrm{C} \leq 1,5 \ \mu\mathrm{m}/°\mathrm{C}.$$

**11.** Groupe de lentilles (10, 20, 30) selon la revendication 1, dans lequel le groupe de lentilles (10, 20, 30) comprend en outre un diaphragme (ST), et le diaphragme (ST) est situé sur un côté qui appartient au premier groupe (G1) et qui fait face au côté image ; ou le diaphragme (ST) est situé sur un côté qui appartient au premier groupe (G1) et qui fait face au côté objet.

**12.** Groupe de lentilles (10, 20, 30) selon la revendication 1, dans lequel une surface côté objet (S1) de la première lentille (L1) est une surface convexe en position paraxiale.

**13.** Module de caméra (1, 2, 3), comprenant un capteur d'image (13), dans lequel le module de caméra (1, 2, 3) comprend en outre le groupe de lentilles (10, 20, 30) selon l'une quelconque des revendications 1 à 12, et le capteur d'image (13) est situé du côté image du groupe de lentilles (10, 20, 30).

**14.** Dispositif terminal (100), comprenant le module caméra (1, 2, 3) selon la revendication 13.

FIG. 1

Longitudinal spherical aberration

Focal length (millimeter)

FIG. 2

Astigmatism field curve

Focal length (millimeter)

FIG. 3

Distortion

% Distortion

FIG. 4

Off-axis chromatic aberration

FIG. 5

FIG. 6

FIG. 7

Longitudinal spherical aberration

FIG. 8

Astigmatism field curve

FIG. 9

Distortion

FIG. 10

Off-axis chromatic aberration

Focal length (micrometer)

FIG. 11

FIG. 12

FIG. 13

Longitudinal spherical aberration

Focal length (millimeter)

FIG. 14

Astigmatism field curve

FIG. 15

FIG. 16

Off-axis chromatic aberration

Focal length (micrometer)

FIG. 17

FIG. 18

FIG. 19A

FIG. 19B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010076737
- US 4062630 A

- FR 803679 A
- US 2449769 A

**Non-patent literature cited in the description**

- Aberration Theory and Correction of optical Systems. **HERBERT GROSS**. Handbook of Optical Systems, vol. 3
- Handbook of Optical Systems. Wiley-VCH, 01 January 2007, vol. 3

- Correction of Aberrations. Handbook of optical systems, Aberration theory and correction of optical systems. 21 January 2007
- HANDBOOK OF OPTICAL SYSTEMS, ABERRATION THEORY AND CORRECTION OF OPTICAL SYSTEMS. WILEY-VCH, 215-221, 225